# EUROPEAN PATENT SPECIFICATION

(11) **EP 2 454 122 B1**
(45) Date of publication and mention of the grant of the patent: **21.02.2024**
(21) Application number: 10800494.6
(22) Date of filing: 14.07.2010
(51) Int. Cl.: B60Q 1/26

(54) **SELF-POWERED LIGHT BAR**
SELBSTANGETRIEBENER LEUCHTSTAB
BARRE DE FEU D'URGENCE À ALIMENTATION PROPRE

(30) Priority: 14.07.2009 US 225479 P
(43) Date of publication of application: 23.05.2012
(73) Proprietor: Federal Signal Corporation, Oak Brook, IL 60523 (US)
(72) Inventor: GERGETS, Paul, M., St. John Indiana 46373 (US); JOZWIK, Jacek, J., Mokena Illinois 60448 (US)
(74) Representative: Grünecker Patent- und Rechtsanwälte PartG mbB
(86) International application number: PCT/US2010/042002
(87) International publication number: WO 2011/008876

(56) References cited:
- WO-A1-2008/127016
- WO-A2-2007/117854
- CA-A1- 2 433 711
- US-A1- 2002 067 615
- US-A1- 2005 047 167
- US-A1- 2005 162 265
- US-A1- 2007 242 472
- US-A1- 2009 141 511
- US-B1- 6 566 842
- US-B2- 7 327 930
- US-B2- 7 476 013

## Description

### CROSS-REFERENCE TO RELATED APPLICATIONS

### BACKGROUND OF THE INVENTION

Typical emergency response vehicles have many different systems for monitoring and responding to various situations and emergencies. For example, the vehicles are equipped with communications equipment that includes both voice and data generating devices such as radios and computers. This and other electronic equipment (e.g., controls for devices such as light bars) crowd the interior space of the vehicle, which is not designed for this concentration of electronics.

It is extremely difficult to equip the vehicles with all of the needed communications, monitoring, and response equipment. Standard commercial vehicles are retrofitted with this equipment through a labor-intensive process. Retro fitting the vehicles is often an iterative process, as new equipment replaces old. Advances in equipment allow first responders to perform their jobs more safely and efficiently. However, each time equipment advances, vehicles must again be retrofitted. Furthermore, when the vehicle is no longer used by emergency services, the equipment must be removed from the vehicle through another costly, labor-intensive process.

In addition to systems for detecting and responding to emergencies, vehicles must be equipped with various communications systems. For example, in the United States public safety officials including fire departments, police departments and ambulance services primarily use communications systems that work within the VHF and UHF bands. Conventional land mobile radios operate on these and other frequencies. Cellular networks, which operate in the UHF frequency band, are also used for public safety communications systems for both data and voice communications. More recently, the SHF band, such as the 4.9 GHz band reserved by the United States Federal Communications Commission (FCC), have been included in public safety communications systems. Moreover, within these several frequency bands, there are a number of communications standards, such as the IEEE 802.11 protocol, utilized to transmit data. Many other frequency bands and communication protocols are used by emergency service personnel around the country. In order to ensure reliable communications across public safety agencies, vehicles are often now equipped with still further electronics that enable public safety personnel to communicate over several transmissions protocols and/or frequency bands. All of the radios and communications equipment results in a cluttered environment.

As technology evolves and finds applications in the area of public safety, emergency response vehicles increasingly carry more equipment to detect and respond to countless situations and emergencies. Typically, individual systems are installed in the vehicle for each of the tasks aimed at emergency responses. For example, a police vehicle monitors traffic using a radar detector. Cameras mounted in an emergency vehicle gather evidence. Many emergency vehicles have light bars mounted to their roofs. Sirens warn citizens of danger. GPS systems inform a control center of the vehicle's location. Vehicles may contain equipment to detect bio-hazards or chemicals in the event of an industrial spill or terrorist attack. Countless other systems are installed in emergency vehicles based on expected situations. This trend can only be expected to continue.

Emergency vehicles are often equipped with emergency lighting equipment that draw attention to the vehicles and provide visual warning to citizens. Typically this equipment includes flashing or rotating lights, which generating a considerable amount of electromagnetic noise. Because of the noisy environment and to assist in visibility, the emergency lighting equipment is most often housed in a module commonly called a "light bar" mounted to a roof of the emergency vehicle. Installing the emergency light equipment in a light bar lessens the effect the electromagnetic noise has on the operation of sensitive telecommunications equipment inside the vehicle.

Installing in emergency vehicles all of this communications, detection and response equipment is costly and labor intensive. All of it is retrofitted into a vehicle manufactured without any accommodation for this special purpose equipment. Some of the equipment, such as radar units and cameras are typically mounted to the front edge of the interior of the roof such that the radar unit and/or the camera extend downwardly to provide views through the front windshield. Power cables are routed from this equipment to the vehicle's power system through the roof lining and down one of the side posts of the car, separating the front and rear car doors, and then to a controller unit, which is located in the trunk, engine compartment or even under a seat in the interior of the vehicle. Many emergency vehicles are equipped with light bars mounted on the roofs of the vehicles. Power and control cables for the light bars are also fished through the side posts and routed to the trunks of the vehicles or to the engine compartments of the vehicles. These cables are fished through the side pillar of the vehicle separating the front and rear doors. Communications antennas are mounted on the roof and on the trunk. Holes are drilled in the car to attach the antennas. Again, cables are routed to a controller in the trunk of the vehicle. Finally, each piece of equipment is wired to controllers in the vehicle's cabin. There are numerous other systems that are regularly installed in emergency vehicles. As technology advances, new devices must be incorporated into emergency vehicles. This requires taking the vehicle out of service for an extended period of time as older devices are removed from the vehicle and newer devices are installed.

By their nature, emergencies often require deployment of more emergency equipment than normally in use at any given time. Communities must determine how best to provide for emergency situations that may require quick deployment of additional equipment. Typically, communities rely on resources from neighboring communities. This strategy works as long as the neighboring communities are close by and not affected by the same emergency. For emergencies that affect large areas, however, relying on neighboring communities to loan their resources is not a workable strategy.

For example, neighboring communities may face a common emergency such as a hurricane, a terrorist attack or an earthquake. In these types of emergencies, the effected communities will need additional emergency vehicles that are not available from nearby neighboring communities. Moreover, because of the labor intensive and costly installation process, non-emergency vehicles cannot be quickly converted for emergency use. Furthermore, existing emergency vehicles may not have the best combination of equipment for dealing with a particular disaster. The time-consuming installation process prevents vehicles from being quickly adapted to respond to an emergency condition that the vehicle is otherwise not equipped to handle.

After a vehicle is no longer needed by public safety agencies, it is typically sold in the aftermarket. However, all of the communications systems and emergency equipment must be removed from the vehicle before sale. If the vehicle is to be resold at maximum value, the damage to the vehicle done during the process of retrofitting the emergency equipment must be repaired. For example, any holes drilled into the vehicle during installation of the equipment must be patched. The dashboard most likely needs to be repaired because of holes drilled in it to run wiring, mount devices and control units. All of this repairing is expensive and reduces the resale value of the vehicle, which represents a substantial amount of lost revenue to communities.

Another problem facing first responders is the lack of a unified communications network for transmitting voice and data. For example, different police departments responding to the same emergency affecting several communities may use different radios. Furthermore, live video taken from one vehicle at the scene of an emergency is not available to other vehicles responding to the emergency. Current attempts to solve communications problems result in even more equipment and radios being installed into vehicles.

US 2002/0067615 A1 relates to a lamp that is integrated in the surface of a vehicle part and which has internal solar cells. If

### BRIEF SUMMARY OF THE INVENTION

The above problems are solved by the system for use by a vehicle according to claim 1 and a method for providing energy to a vehicle-mounted emergency device according to claim 10.

### BRIEF DESCRIPTION OF THE DRAWINGS

FIG. 1 is a schematic representation of an emergency warning device, such as a light bar, integrated into a broadband community wireless network.
FIGS. 2A and 2B illustrate an emergency warning device of FIG. 1 integrated into a light bar with a wireless connection to a broadband network and a wired or wireless connection to a control head within a vehicle (FIGS. 2A and 2B, respectively).
FIG. 3 illustrates a control interface at a mobile data terminal for controlling modules comprising the emergency warning device.
FIG. 3A illustrates a user interface at the mobile data terminal for controlling a video camera mobile of the emergency warning device, where the user interface is accessible from the control interface.
FIG. 4 illustrates a lower portion of a housing for the light bar in FIGS. 2A and 2B including a controller and a fuel cell.
FIGS. 5A and 5B illustrate alternative mounting assemblies for mounting the light bar to a roof of the vehicle.
FIG. 6 is a sectional view of the lower portion of the light bar taken along line 3a - 3a in FIG. 4.
FIG. 7A illustrates one of several circuit boards in the light bar fitted with warning light assemblies.
FIG. 7B illustrates the opposite side of the circuit board in FIG. 7A, showing various modules mounted on the circuit board in keeping with an explanatory embodiment not part of the invention.
FIG. 8 illustrates an explanatory embodiment not part of the invention of the light bar in FIGS. 1-7 with the top half of the light bar's housing exploded away to reveal an interior space of the light bar populated with various electronic modules and antennas supported on circuit boards in keeping with the illustration in FIG. 7B.
FIG. 9 illustrates an explanatory embodiment not part of the invention of the light bar in FIGS. 1-7 with the top half of the light bar's housing exploded away as in FIG. 8 to reveal an interior space of the light bar populated with various electronic modules and antennas supported on a single monolithic circuit board.
FIG. 10A illustrates a cross sectional view of a circuit board suitable for use as the circuit board in FIGS. 8 and 9 whose ground plane when placed in the light bar creates an area within the light bar that is relatively free of stray electromagnetic radiation from the operation of the warning lights.
FIG. 10B illustrates a cross sectional view of an alternative circuit board also suitable for use as the circuit board in FIGS. 8 and 9 whose ground plane when placed in the light bar creates an area within the light bar that is relatively free of stray electromagnetic radiation from the operation of the warning lights.
FIG. 10C illustrates an explanatory embodiment not part of the invention of the light bar in FIGS. 1-7 where a grounding plane within a light bar and separate from the circuit board(s) for supporting the warning lights provides isolation from the electromagnetic spray of the warning lights.
FIG. 11 is a schematic diagram illustrating the electrical connections between the controller and the circuit boards in FIG. 8.
FIG. 12 is a schematic diagram of the controller in FIG. 4.
FIG. 13 illustrates an explanatory embodiment not part of the invention in which external power and signaling cables running to the light bar are eliminated by providing one or more power sources resident in the light bar and wireless receiver circuitry for receiving small signal commands from a remote control source.
FIG. 14 is a schematic diagram of the electronic modules in an explanatory embodiment not part of the invention t of the light bar.
FIG. 15A is a schematic illustration of a wireless wide area network including a wireless mesh network connecting fully integrated light bars such as those illustrated in FIGS. 1-10 to a control center.
FIG. 15B is a schematic illustration of a wireless wide area network including a wireless mesh network and a wireless point to multipoint network connecting fully integrated light bars such as those illustrated in FIGS. 1-10 to a control center.
FIG. 15C is a schematic illustration of a wireless wide area network including a point to multipoint network connecting fully integrated light bars such as those illustrated in FIGS. 1-10 to a control center.
FIG. 15D is a schematic illustration of a wireless wide area network including a cellular network connecting fully integrated light bars such as those illustrated in FIGS. 1-10 to a control center.
FIG. 16 is a perspective view of the light bar according to the embodiments of FIGS. 17, 17A, 17B, 17C with the assembly comprising one of the end sections of the light bar exploded to more easily show the various parts.
FIG. 17 is a schematic diagram of an explanatory embodiment not part of the invention in which solar panels and battery packs internal to the housing of the light bar are the primary power sources to operate the bar.
FIG. 17A depicts an embodiment of the invention in which the battery charger is equipped with a wireless energy device for trickling charging the battery pack.
FIG. 17B depicts a further embodiment of the invention in which the battery charger trickle charges the battery pack through a far field energy transfer device.
FIG. 17C depicts an explanatory embodiment not part of the invention in which a load management system is included in the interior of the light bar in order to automatically and dynamically orchestrate the sources of power for driving the electronics of the light bar.

While the following detailed description is made in connection with preferred and alternative embodiments referencing the drawings, the description is not intended to limit the invention to those particular embodiments. On the contrary, the invention is intended to cover all alternatives and equivalents as may be included within the spirit and scope of the invention as defined by the appended claims.

### DETAILED DESCRIPTION OF THE INVENTION

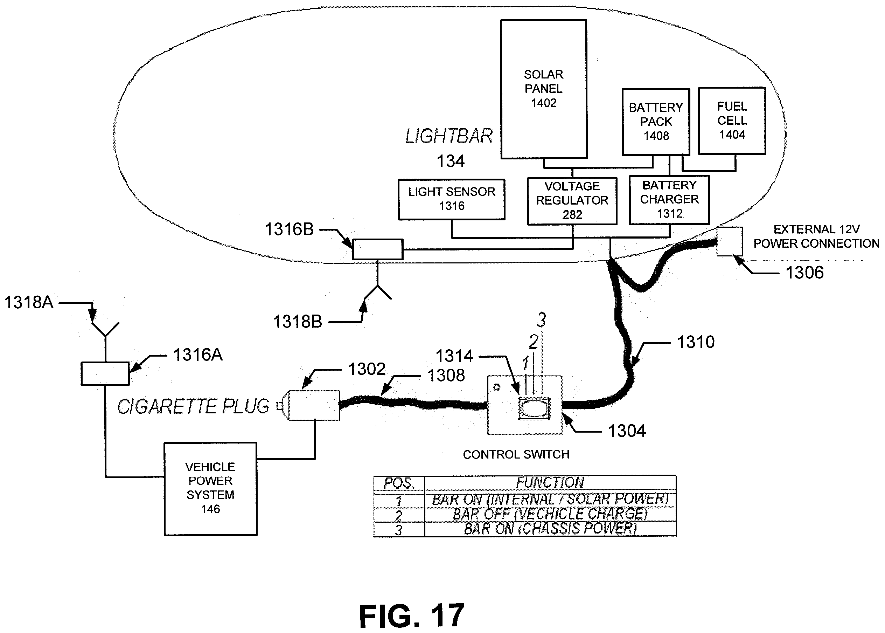

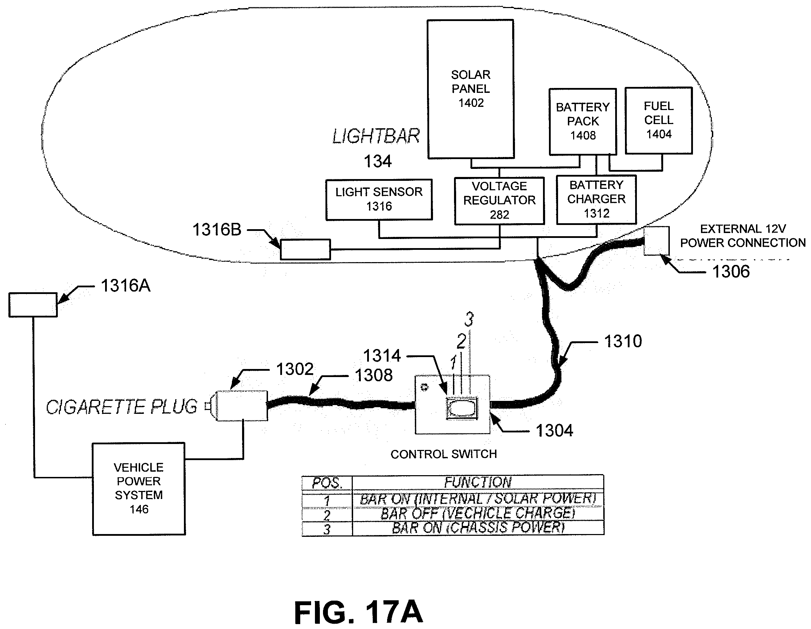

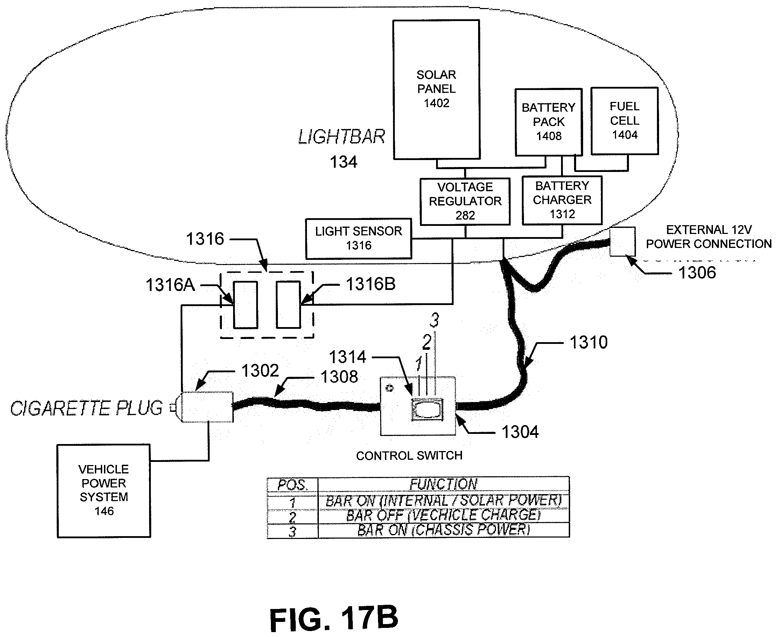

The following description is intended to convey the operation of exemplary embodiments of the invention to those skilled in the art. The embodiments of the present invention are described with respect to FIGS. 17A and 17B, and the remaining embodiments merely serve the better understanding of the invention. It will be appreciated that this description is intended to aid the reader, not to limit the invention. As such, references to a feature or aspect of the invention are intended to describe a feature or aspect of an embodiment of the invention, not to imply that every embodiment of the invention must have the described characteristic.

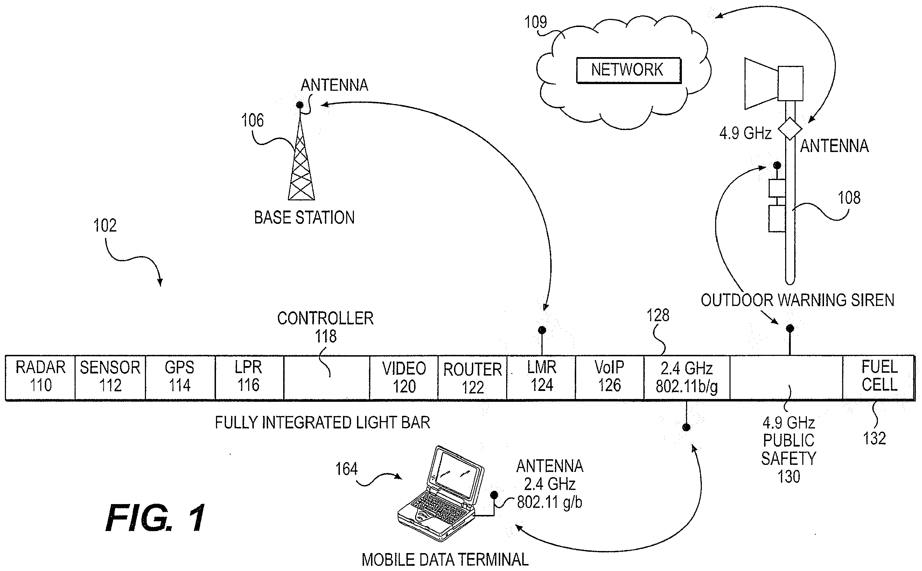

Turning to the drawings and referring first to FIG. 1, an emergency device 102 is in wireless communication with a mobile data terminal 164, a base station 106 and an outdoor warning siren 108. The emergency device 102 contains a number of monitoring, warning and response systems as needed based on its deployment. For example, in one embodiment of the invention, the emergency device 102 is attached to a police vehicle. When it is attached to a police vehicle, the emergency device 102 likely includes modules otherwise located in the vehicles interior spaces. For example, in the illustrated embodiment of FIG. 1, the device includes (1) a video camera 120 for streaming video signals to displays that may be both in the vehicle and at remote locations, (2) a radar unit 110 for detecting the speed of other vehicles, (3) a sensor 112 for detecting the presence of chemical or biological agents, (4) a global positioning system ("GPS") 114 providing the location of the emergency device, and (5) a license plate recognition system ("LPR") 116 providing the license plate number of vehicles in the vicinity. In the illustrated embodiment, each of the modules 110 - 116 interfaces with a controller 118. Video camera 120 provides video footage (e.g., streaming video) of an area near the emergency device 102. The video camera or module 120 connects to controller 118 or router 122 for routing the video to either an onboard storage or display at the mobile data terminal 164 or routing the video to a remote terminal by way of the base station 106 or a transceiver associated with the outdoor warning siren 108. The outdoor warning siren 108 connects to a wide area network ("WAN") 109. The WAN may be a public network such as the internet or a private network reserved for emergency use. The outdoor warning siren 108 connects directly to the network 109 or connects through a gateway device.

The emergency device 102 also includes several wireless network devices. For example, the emergency device 102 also includes a land mobile radio ("LMR") 124 for communicating with other emergency service personal over a variety of frequencies including the UHF and VHF bands. A voice over Internet Protocol ("VoIP") module 126 of the emergency device 102 allows a user of the device to transmit and receive voice messages over standard data networks such as a network based on the IEEE 802.11 standard. A wireless fidelity ("Wi-Fi") module 128 transmits and receives data over an IEEE 802.11 network. A transceiver 130 implements a public safety radio operating at the 4.9 GHz frequency, which the United States Federal Communication Commission (FCC) has dedicated to public safety applications.

Finally fuel cell 132 of the emergency device 102 provides power for the emergency device 102. Preferably, the fuel cell is incorporated in the emergency device 102 as suggested by the illustration in FIG. 1. By providing a power source within the emergency device 102, the device is fully self contained and can be easily and quickly retrofitted onto any vehicle.

Although FIG. 1 depicts three transceiver modules, the LMR 124, Wi-Fi 128 and the public safety radio 130, one skilled in the art of telecommunications will appreciate that any appropriate wireless standard may be used to enable communication between the emergency device 102 and remote locations. For example, a cellular transceiver for connection to cellular data or voice networks may be included in the emergency device 102. In general, any number of transceiver types may be employed in the emergency device 102. For example, one Wi-Fi transceiver 128 may provide all necessary communication links. Data signals can utilize the Wi-Fi link and voice may pass over the Wi-Fi link using VoIP. On the other hand, a number of specialty transceivers may be employed in the emergency device 102 in order to ensure a more robust communications environment. Embodiments of the emergency device 102 will be more fully described below.

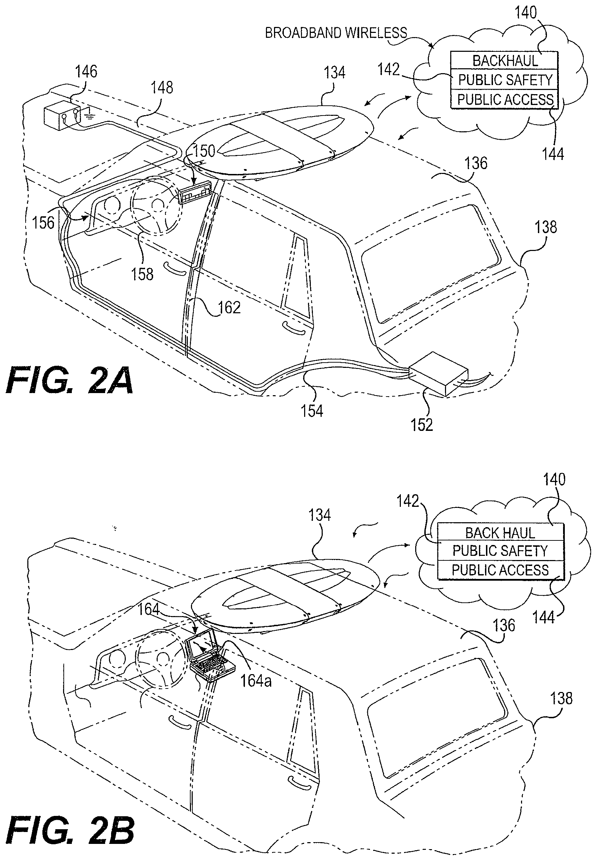

Emergency signaling systems of the type mounted to the roofs of emergency vehicles are commonly called "light bars" because they are typically shaped as bars traversing the roofs of vehicles. In keeping with this convention, in FIG. 2A and FIG. 2B the illustrated emergency signaling system 134 is hereinafter referred to as a "light bar" since it is primarily intended for mounting to the roofs of emergency vehicles such as the roof 136 of the illustrated vehicle 138. However, those skilled in the art of emergency warning device will appreciate that the device described hereinafter as a light bar can take on a variety of shapes and placements throughout a community as the need arises. In one embodiment of the invention, emergency device 102 is integrated into light bar 134 for a vehicle. The emergency device could be mounted to other types of mobile units such as boats and aircraft. Furthermore, the emergency device 102 could also be mounted to stationary objects such as a commercial or residential building in order to convert the building to a temporary emergency command center. In any event, details of the emergency device 102 are set forth below in connection with an embodiment in which the device is the light bar 134 for mounting to the vehicle 138.

In keeping with one embodiment of the emergency device, the light bar 134 in FIGS. 2A and 2B connects wirelessly to a backhaul network 140, a public safety network 142 and a public access network 144. In FIG. 2A, the light bar 134 is wired to the vehicle's power system 146 through cables 148. A control head 150 in the passenger compartment of the vehicle 138 allows an occupant in the vehicle to control the lights and modules 110 - 130 in the light bar 134. The control head 150 connects to control unit 152 through wires 154 in order to communicate control signals to the modules 110-130 in the light bar 134. The control unit 152 in the illustrated embodiment provides control functions for other emergency signaling apparatus associated with the vehicle 138. For example, the control unit 152 may also serve a siren. The operator of the vehicle 138 preferably mounts the control head 150 to the dashboard/instrument panel area 156 to the right of the steering wheel 158 for easy access. Although the control unit 152 is depicted mounted in the trunk of the vehicle, it may be mounted elsewhere within the vehicle. For example, control unit 152 may be mounted under the dashboard area 156.

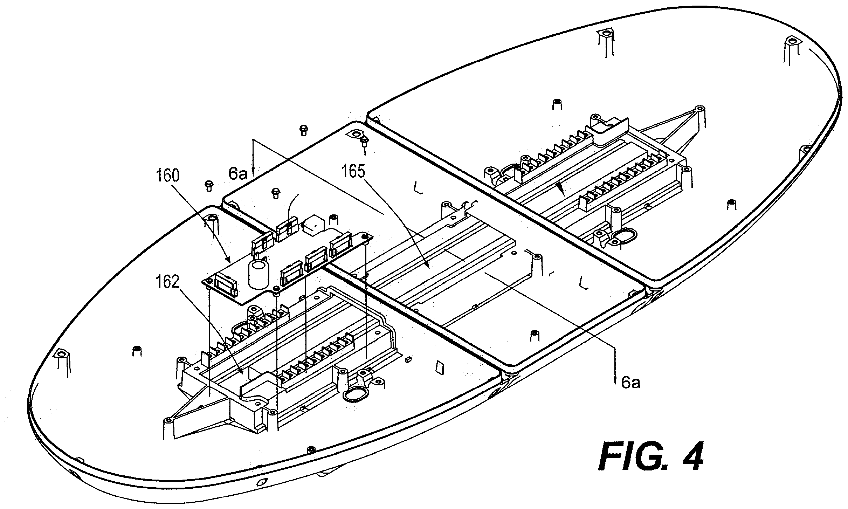

Keystrokes to a keypad incorporated into the control head 150 generate control signals and the control head provides the signals to the control unit 152 by way of cables 154, which in turn communicates signals to the control unit 160 (FIG. 4) within the light bar 134 by way of cable 162. A control system such as Federal Signal's Smart Siren^{™} system is a suitable example of the illustrated control system for certain embodiments of the invention.

In FIG. 2B, the light bar 134 is in wireless communication with a mobile data terminal ("MDT") 164, enabling the light bar to be completely free of external wiring if the power source (e.g., fuel cell and/or solar cell) is contained in the light bar. The MDT 164 replaces the control head 150 in FIG. 2A and controls the lights and modules 110 -130 in the light bar 134. MDT 164 may be a conventional laptop computer equipped with a wireless network interface card (NIC). Preferable as explained hereinafter, the MDT 164 includes a touch screen 164a allowing the user to interact with the light bar by simply touching appropriate areas of the screen as prompted by a user interface displayed on the screen.

Any appropriate wireless standard can be used to connect the MDT 164 and the light bar 134. Examples of appropriate standards include Wi-Fi a, b, g, or n as defined by the Institute of Electrical and Electronics Engineers ("IEEE") in the 802.11 specification. Additionally Bluetooth, Wireless USB or Zigbee, which are all based on IEEE 802.15, can be used as the standard between the MDT 164 and the light bar 134. A user controls the system by entering commands into the MDT 164. Commands are entered into the MDT through any appropriate means including use of a keyboard, touch screen 164a or voice recognition software. Commands entered into the MDT are transmitted to the light bar 134 via the wireless network. The MDT 164 can display information gathered by the modules 110 - 130 located in the light bar 134. For example, in one embodiment of the invention live video from the video camera 120 is displayed on the screen 164a. Speeds of passing vehicles detected by the radar unit 110 are displayed by the MDT 164. Additionally, the MDT 164 displays the license plates of passing vehicles detected by the LPR 116 module.

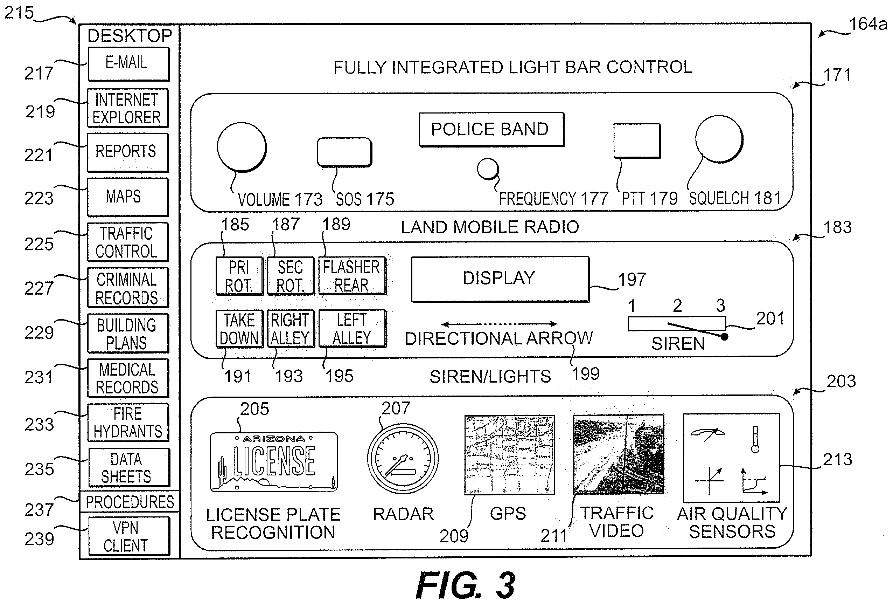

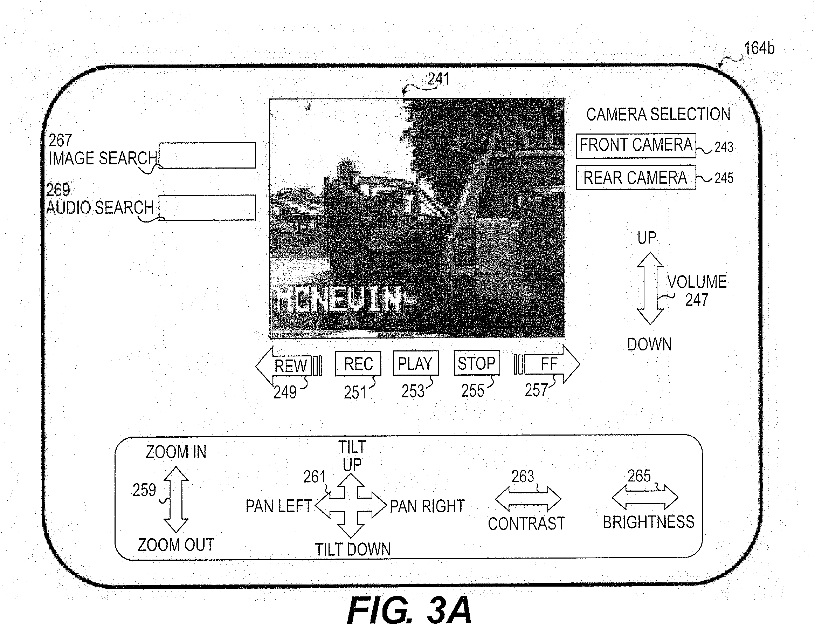

FIG. 3 illustrates one embodiment of the interface for a touch screen 164a integrated into the MDT 164. The touch screen 164a includes a LMR interface 171 that either replaces or is in addition to the standard radio controls already located within the vehicle for communicating with the LMR 124. The interface 171 includes buttons on the touch screen 164a for operating the land mobile radio (LMR) 124 in much the same manner as is accomplished with a conventional, dedicated control head for the LMR that includes mechanical knobs and switches. For example, the user interface 171 provides a volume control 173, a SOS button 175, a frequency control 177, a push to talk control 179 and a squelch button 181.

A light and siren interface 183 controls the light assemblies and siren mounted on a vehicle. The interface 183 includes a primary lights button 185, a secondary lights button 187 and a flasher rear button 189. A take down button 191, right alley button 193 and left alley button 195 operate additional light assemblies. The display 197 indicates the mode that the light assemblies are operating in. Directional control 199 allows the operator to enable flashing directional lighting assemblies. Finally, siren control 201 enables various siren modes.

Module panel 203 displays the current readings for various modules 110 - 132 housed in the light bar. For example, the license plate recognition system display 205 indicates the license plate number of nearby vehicles. The radar 207 shows the speed of nearby vehicles. The GPS 209 shows a map with nearby emergency vehicles as well as the location of the occupied vehicle. The traffic video 211 shows live video feeds from traffic monitoring cameras located throughout a community. The air quality sensors 213 display information regarding community air quality. Clicking a sensor display expands the display window to a full screen mode. For example, if a user touches the traffic video display 211, it will expand to fill the entire screen.

In another embodiment, the user interface of the touch screen 164a may be similar to the user interface illustrated and described in U. S. patent application no. 11/505,642, filed August 17, 2006 (now US Patent No. 7,746,794) and entitled "Integrated Municipal Management Console".

In order to control the devices in the module panel 203 of the user interface 164a, selection of any of the icons 205, 207, 209, 211 and 213 causes a dialog box or window to appear on the touch screen such as the one illustrated in FIG. 3A for the traffic video icon 211. In FIG. 3a, the user interface 164b may be a window or dialog box that appears over the user interface 164a in FIG. 3. Alternatively, the user interface 164b may appear in substitution for the user interface 164a. In either event, the user interface 164b presents to the user various controls for the video camera 120 in FIG. 1. The touch screen interface 164b either replaces or is in addition to standard controls for the video camera 120. The interface 164a includes buttons on the touch screen 164b for operating the video camera 120 in much the same manner as is accomplished with a conventional, dedicated control head for the camera, which includes mechanical knobs and switches. The video display 241 displays a live image from the camera 120 mounted in the emergency device 102 or from remote cameras whose signal is received over the network connection. Additionally, the video display 241 displays recorded images taken by the camera 120 or images recorded by another camera and made available for playback on the display 241.

The user interface 164b contemplates more than one camera 120 in the emergency device 102. In this regard, the user interface 164b includes touch buttons 243 and 245 for selecting front and rear cameras, respectively. A volume control 247 adjusts the audio volume associated with a video. The "rew" touch button 249 rewinds a recorded video segment. The "rec" touch button 251 toggles the record feature of the video camera 120 and MDT 164. The play touch button 253 plays back recorded video. The stop touch button 255 stops video play back. The "FF" touch button 257 fast forwards recorded video. The zoom control 259 zooms in and zooms out of a video image. The pan / tilt control 261 rotates the video image up and down and left and right. The contrast touch button 263 and brightness touch button 265 control the contrast and brightness of the image, respectively. The image search interface 267 and audio search interface 269 allow a user to search for images and audio segments in stored video files.

Returning to the touch screen 164a in Fig 3, it includes buttons for accessing various computer programs and resources. For example, e-mail button 217 launches a user's email program. Similarly, the Internet Explorer° button 219 launches Microsoft's internet browser. The reports button 221 launches various reports or forms for reports maintained locally or at a remote server. One or more of the broadband wireless connections provides the link to the remote server. Maps button 223 launches mapping software, which presents maps to the user stored either locally or at a remote server. The traffic control button 225 launches a program whose interface enables the user to control traffic intersection lights. Touching the criminal records button 227 launches a program that enables access to criminal records stored either locally or at a remote server. The building plans button 229 gives the user access to databases of building plans for various buildings stored either locally or at a remote server. Similarly, the medical records button 231 allows a user to search databases of medical records maintained either locally or at a remote server. The fire hydrants button 233 launches a program that displays the location of nearby fire hydrants. The virtual private network (VPN) client 239 provides a secure connection over otherwise public networks to the first responder's server to access remote databases containing confidential information such as police records. While the VPN client button may allow for browsing of remote databases, the data sheets button 235 allows a user to search remote data sheets, which may contain information such as details of particular types of chemicals involved in a chemical spill. The procedures button displays procedures 237 for handling situations faced by first responders at a scene of an emergency. For example, a data sheet may provide guidance for dealing with a heart attack victim or how best to react to a water rescue.

Information such as voice and data signals sent over a wide area network ("WAN") and received by one of the transceivers LMR 124, Wi-Fi 128 or public safety 130 can be forwarded to the MDT 164 through the wireless connection between it and the light bar 134. These messages can either be displayed on the MDT's screen or audibly played over speakers either in the vehicle or in the MDT. Messages originating as voice signals can be play directly. Messages originating as data signals can be converted to voice signals by use of commercially available text-to-speech software and played audibly over speakers in the vehicle.

In one embodiment of the emergency device 102, a transceiver sends and receives messages encoded in data packets, an exemplary one of which is illustrated below. The data packet includes a header with information indicating the beginning of a packet. An encryption section contains information related to the encryption of the packet. An address section may contain items such as the emergency device's IP address and MAC address and the packet's destination IP address and MAC address. The data section contains the packet's payload. The payload includes the data to be transmitted. One skilled in the art of communications will recognize that data packets may consist of various fields and are not limited to the specific fields recited. For example, the data format may be TCP/IP based and include IEEE 802.1x compatibility.

| | | | |
|---|---|---|---|
| Header | Encryption | Address | Payload |

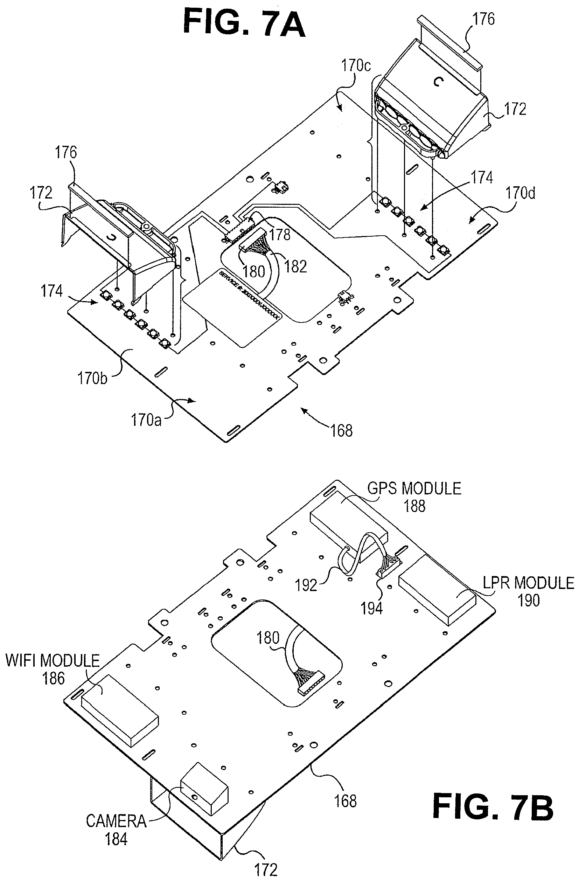

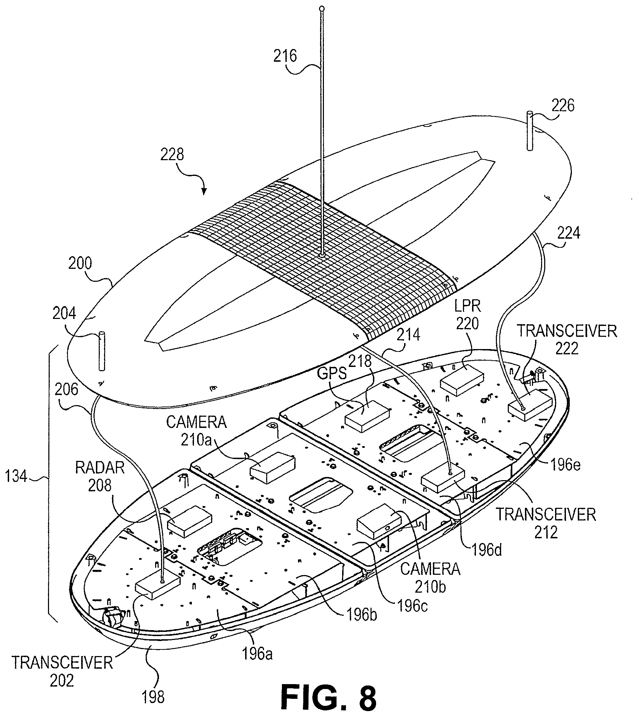

FIG. 4 depicts a lower portion of the light bar 134 whose top half is best seen in FIGS. 7 and 8. From the controller 160 in FIG. 4, the operation of the light bar modules are directly controlled in accordance with signals generated at the control head 150 or MDT 164. Installers of the light bar 134 typically strategically place cables 154 and 162 (FIG. 2A) within the interior of the vehicle 138 so they are the least conspicuous and require the least modification of the standard interior features. In this regard, serial connections among the control head 150, the control unit 152 and the controller 160 in the light bar 134 minimizes the number of wires comprising the cables 154 and 162. Each of the two cables 154 and 162 includes two data-carrying wires for bi-directional serial communications. Separate cabling from a battery 146 carries power and reference ground wires to the control units 152 and 160, which in turn deliver the power to the modules in the light bar 134. In an alternative embodiment illustrated in FIG. 2B, the control signals are electromagnetic signals that propagate through the air so that the cables are not needed for controlling the light bar 134. In a further alternative embodiment also illustrated in FIG. 2B, the cables 154 and 162 are entirely eliminated by providing one or more power sources in and/or on the light bar 134.

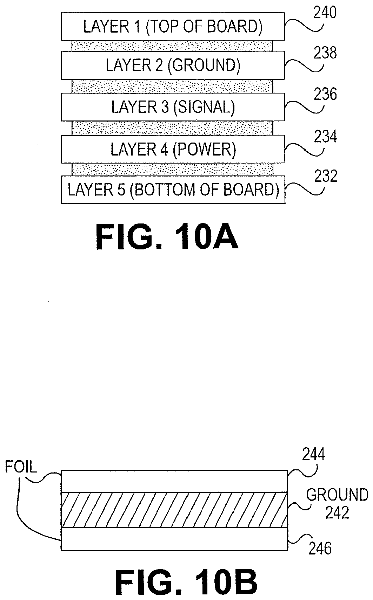

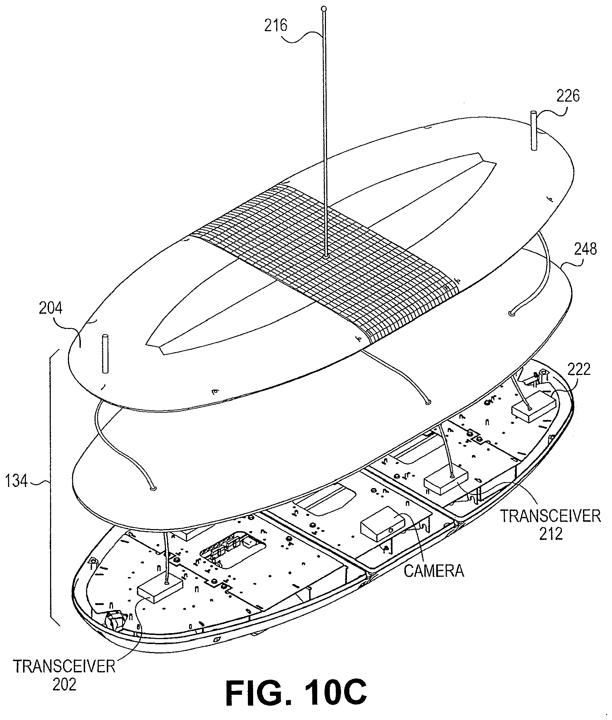

In the illustrated embodiment, the controller 160 is mounted to the lower housing of the light bar 134. However, the controller 160 can be placed anywhere within or near the light bar 134. The electrical connection between the controller 160 and the modules is described hereinafter in connection with the illustration of FIG. 10. Looking at the lower portion of the light bar 134 depicted in FIG. 4, a channel 162 receives a rechargeable battery at location 165 for providing power to the modules 110 - 132 and warning lights (e.g., light emitting diodes, strobes and/or halogens) housed within the light bar. With both a battery and a wireless connection between the light bar 134 and the MDT 164, the light bar is mounted to the vehicle 138 without the need to run any wiring 148, 162 and 154 through the vehicle. Thus, the light bar 134 is easily installed on the roof 136 and the MDT 164 is easily installed in the interior of the vehicle 138.

Various known fastening systems may be used to secure the light bar 134 to the roof 136 of the vehicle 138. For example, Federal Signal Corporation's U.S. Pat. No. 6,966,682 provides one exemplary means of attaching the light bar 134 to the vehicle 138. The MDT 164 can be powered by the battery 146 or it can operate from power provided by a fuel cell or solar panels.

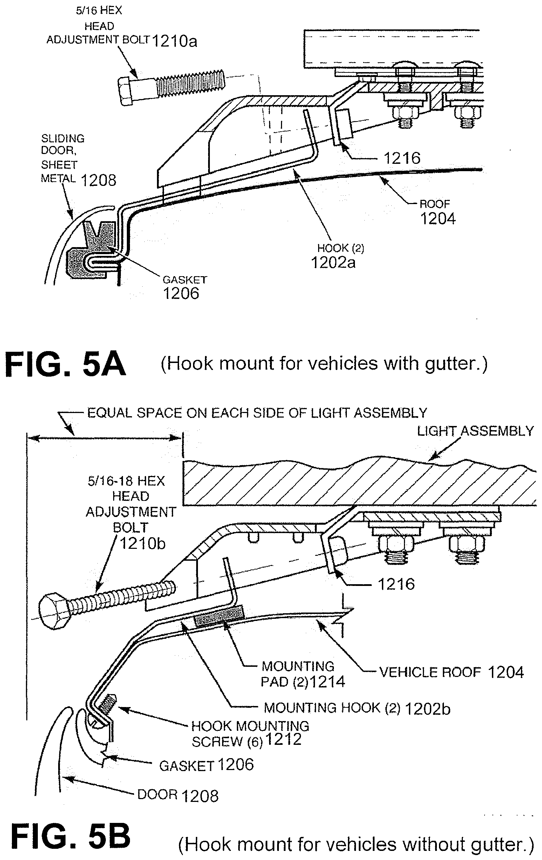

Another exemplary means for fastening the light bar 134 to the vehicle 138 is illustrated in FIGS. 5A and 5B. The light bar 134 is mounted on the roof 136 of the vehicle 138 by means of fasteners such as the illustrated mounting hooks (1202a and 1202b). The light bar 134 can be hook, flat, or permanently mounted on the vehicle roof. FIGS. 5A and 5B illustrate the installation of the light bar 134 on vehicles with and without gutter, respectively. In general, the mounting hook (1202a or 1202b) is provided on each side of the vehicle 138 to affix the light bar 134 onto the vehicle roof. One end section of the mounting hook (1202a or 1202b) is inserted and affixed between the roof gasket 1206 and the roof metal part 1204. In particular, for vehicles with gutters as shown in FIG. 5A, the end section of the mounting hook 1202a is provided with a curve which securely attaches to the gutter of the vehicle roof and is held in place by the gasket 1206. For vehicles without gutter as shown in FIG. 5B, the end section of the mounting hook 1202b is first inserted between the gasket 1206 and the vehicle roof 1204 and held in placed through one or more hook mounting screws 1212.

As further shown in FIGS. 5A and 5B, the body of the mounting hook (1202a or 1202b) has a contour following that of the vehicle roof 136. Mounting pad 1214 may be provided between the mounting hook and the vehicle roof 1204 to provide additional support. As further shown FIGS. 5A and 5B, the other end section of the mounting hook (1202a or 1202b) is raised so that it faces towards a mounting pad 1216 of the light bar 134. A mounting bolt (1210a or 1210b) is then used to secure the light bar 134 through the mounting pad 1216 and the mounting hook (1202a or 1202b).

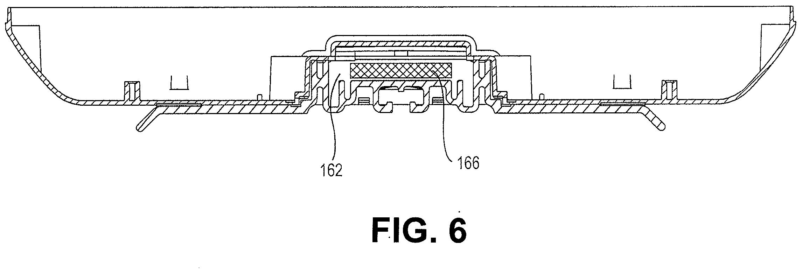

The location 165 in the channel 162 containing a battery 166 can better be seen in FIG. 6, which is a cross sectional view of FIG. 4 taken along the 5a - 5a. In addition to or as an alternative to fuel cells, channel 162 can house a fuel cell for internally powering the light bar lights and modules 110 - 132. The fuel cell produces electricity from a fuel supply and oxygen. A typical fuel cell uses hydrogen and oxygen as reactants on the anode side and cathode side, although other fuels may be used. Suitable fuel cells are commercially available from a number of companies such as Adaptive Materials, Inc. of Ann Arbor, Michigan and CellTech Power LLC of Westborough, Massachusetts.

In one embodiment of the light bar 134, several, large area circuit boards provide the platform support for the warning lights in the light bar. One of the circuit boards 168 is depicted in FIG. 7A and FIG. 7B. Preferably, the circuit board is composed of a composition that maintains its structural and electrical integrity over the ambient conditions of the light bar 134. In this regard, the light bar 134 is directly exposed to weather conditions in the area it is placed in service, which can include both hot and cold weather extremes. Also, some of the types of the light beam assemblies and modules 110 - 132 have attributes that may impose additional requirements on the circuit board. For example, some light beam assemblies produce significant amounts of heat, making the heat sinking capacity of the circuit board an important characteristic. Specifically, light emitting diodes (LEDs) require adequate heat sinking support in order for the LEDs to operate at their greatest efficiency. In addition, some of the modules contain sensitive electronics, which require environments relatively free of electromagnetic interference such as the electromagnetic spray generated by the light modules, power source and other modules in the light bar 134. In addition, the printed circuit board is a structural component in the light bar assembly in that it provides a platform for supporting the modules in addition to the warning light assemblies.

Given the foregoing considerations and requirements, suitable circuit boards for the invention presently available include but are not limited to the following: Fiberglass, phenolic, aluminum (e.g., Berquist boards), steel and ceramic printed circuit board materials. Regardless of the specific composition, the boards need to be structurally robust to environmental conditions that include temperature cycling over an expected wide range that the light bar will be exposed to wherever it is operating. Some specific examples of aluminum products and sources of suitable boards are ELPOR^{™} by ECA Electronics of Leavenworth, Kansas and Anotherm^{™} of TT Electronics PLC of Clive House 12-18, Queens Road, Weybridge Surrey KT13 9XB, England. Moreover, conventional fiberglass-based circuit boards may also provide a basic build block for a suitable board. Multi-layered fiberglass boards by M-Wave^{™} of Bensenville, Illinois, U.S.A. can provide the necessary structural strength and they can be fabricated to have the desired thermal properties by incorporating large ground and power planes into the board and multiple "pass throughs" or "vias."

Turning to FIG. 7A, an exemplary embodiment of a circuit board 168 in keeping with the invention includes four areas or stations 170a, 170b, 170c and 170d for fastening light beam assemblies 172 to the board 168. Each of the areas 170a-170d includes connections for various light beam assemblies 172 illustrated in FIG. 7A. One skilled in the art of emergency lighting will recognize that many types of warning light assemblies can be installed on the circuit board. Appropriate examples include, but are not limited to light emitting diodes ("LEDs") and halogen warning light assemblies. Further, the assemblies can be in a fixed orientation or may be capable of oscillating. The warning light assemblies in FIG. 7A include six (6) LEDs collectively identified as 174 and a reflector 176.

The LEDs 174 are laid down on the circuit board 168 as part of the board's fabrication process. In this regard, the circuit board 168 includes conductive paths leading from a connector 178 mounted along an edge of an opening in the board. As discussed in further detail hereinafter, the connector 178 mates with a connector 180 of a cable 182 that has an opposing end connected to the controller 160. The cable 182 carries power and control signals to the board 168. Electrical lead lines in the circuit board 168 carry power and control signals to the electronic components (e.g., drivers) and LEDs 174 and to all other types of light beam assemblies and modules on the circuit board 168.

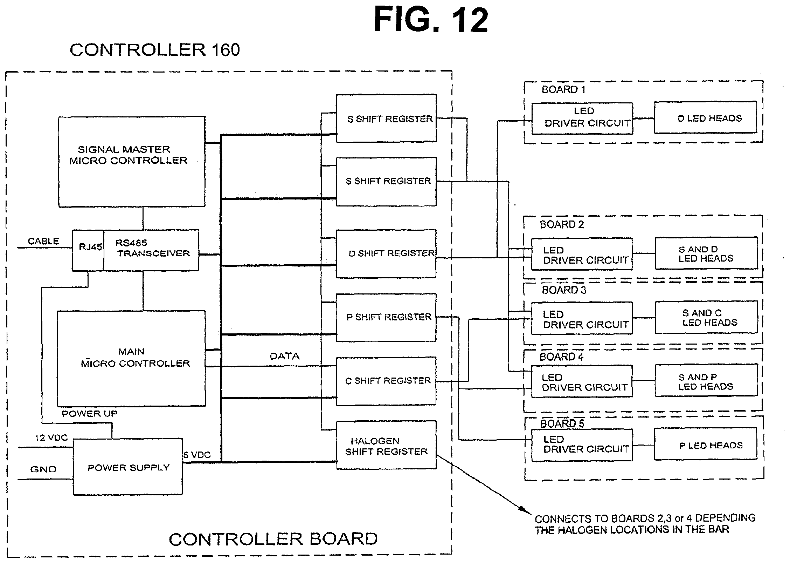

FIG. 7B illustrates the opposite or second side of board 168 shown in FIG. 7A. Light assembly 172 is visible on the bottom of the board 168. The illustrated embodiment depicts four modules mounted on the board. The video camera 184 provides video surveillance of an area near the light bar 134. For example, the video camera may be an Axis 211 network camera by Axis Communications AB, Emdalavägen 14, SE-223 69, Lund, Sweden. The Wi-Fi transceiver 186 provides wireless network connectivity to IEEE 802.11 compatible networks. An example of the Wi-Fi transceiver is a HotPort 3100/PS, which is a multi-spectrum transceiver capable of operating in the IEEE 802.11 2.4GHz and 5.0GHz bands and in the 4.9GHz public safety band. The HotPort 3100/PS is a wireless mesh network node suitable for broadband data, video, and voice (VoIP) communication. The HotPort 3100/PS is available from Firetide, Inc., 16795 Lark Ave., Suite 200, Los Gatos, California 95032, U.S.A. Appropriate network configurations will be discussed hereinafter with reference to FIG. 12. The GPS unit 188 provides the location of the emergency device 102 as currently depicted in a light bar 134. Appropriate GPS units are available from One Track, Inc. of Phoenix, Arizona, U.S.A. The LPR unit 190 provides the license plate numbers of nearby vehicles. An example of appropriate LPR unit 190 is AutoFind available from Autovu Technologies, Inc. of Montreal, Québec, Canada.

A wide variety of modules can be mounted on the board 168 in various configurations in order to perform monitoring and response activities. The cable 180 provides control signals, data signals and power from the controller 160 for the modules 184 - 190. Each of the modules 184 - 190 can be soldered directly to the board 168, or may be fitted with a plug that is received by a socket on the board. By constructing the modules and circuit board 168 with a plug and socket arrangement, the combinations of modules in the light bar 134 are variable and amenable to customization to fit any desired configuration. In fact, for a fully integrated light bar 134 in which the power supply is contained in the light bar, any combination of modules can be easily and quickly placed into the circuit board 168 and the light bar attached to a vehicle so as to provide a light bar that best serves the requirements of a particular emergency condition requiring the vehicle to be retrofitted and put into emergency service.

The electrical connections from a module to the board 168 may be made through the socket, by direct connection or through use of a cable. For example the Wi-Fi module 186 is depicted with a direct connection to the board 168. In contrast, the GPS module 188 is depicted connecting to the board 168 via a cable 192 connected to a plug 194 on the circuit board. In general, each of the modules can use any appropriate connection method of connecting to the board. Additionally, modules do not have to be mounted to a board 168 at all, but may be mounted directly to the light bar 134. Finally, the emergency device 102, comprising various modules 110 - 132, does not have to take the form of a light bar. For example, the emergency device 102 may be built into a body of a vehicle designed for emergency services such as fire trucks and ambulances. The device may be in an undercover police vehicle. Other public service vehicles such as street sweepers may also incorporate the emergency device 102. Still further, the device can be integrated in to stationary platforms such as emergency sirens mounted to poles distributed through a community. The devices may also be equipped with portable platforms that allow the devices to be deployed as needed for any special circumstances.

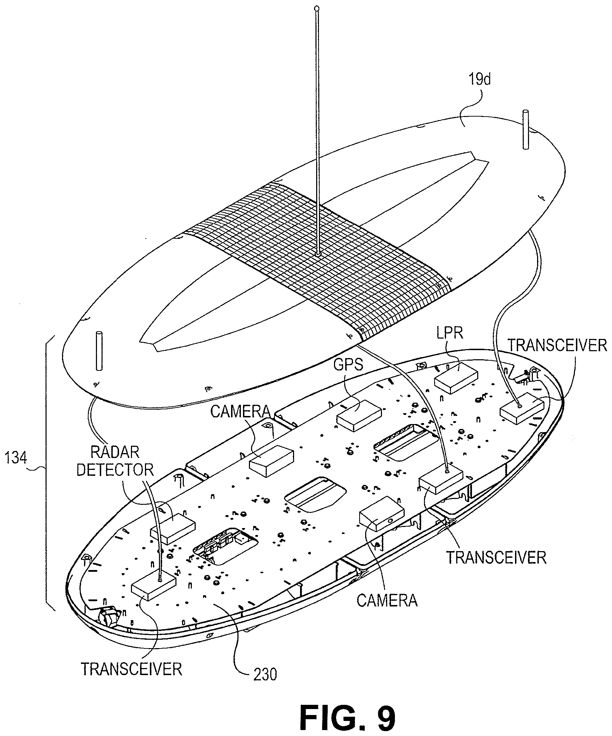

In the fully populated light bar 134 depicted in FIG. 8, the lower housing 198 of the light bar houses five (5) circuit boards 196a, 196b, 196c, 196d and 196e of the type illustrated in FIGS. 7A and 7B. The upper housing 200 is exploded away from the lower housing 198 in order to show the circuit boards mounted to the interior of the light bar 134. The light assemblies 172 are mounted on the underside of the circuit boards 196a - 196e and are thus in the lower housing of the light bar. The transceiver module 202 mounted on circuit board 196a provides wireless communications with a network such as a Wi-Fi network typically running at 2.4 GHz or 5 GHz. The transceiver 202 connects with antenna 204 thru cable 206 in order to broadcast and receive messages. In the illustrated embodiment, the antenna 204 is mounted to the housing of the light bar. However, the antenna 204 may alternatively be mounted to the circuit board and either fully enclosed within the housing or extending through a hole in the housing that includes a water tight seal. The radar module 208 provides the speed of nearby vehicles. Camera modules 210a and 210b provide video surveillance facing the front and rear of the light bar 134. A second transceiver 212 acts as the land mobile radio (LMR). Cable 214 connects the transceiver 212 with the antenna 216. GPS module 218 provides location information. LPR 220 provides the license plate number of nearby vehicles. Transceiver 222 connects to the public safety network, typically running at 4.9 GHz. The cable 224 connects the transceiver 222 to its associated antenna 226. Each of the modules connects to its associated circuit board thru either a direct connection or a cable 192. The circuit boards may connect directly to one another or may connect to the controller 160 through use of a cable 180. Any number or combination of modules may be utilized by embodiments of the light bar 134, depending on expected uses of the emergency device 102. Further, the modules depicted in FIG. 8 can be oriented in a variety of ways within the light bar 134 and the particular layout depicted in the figure represents only one embodiment. Referring to FIG. 9, in an alternative embodiment of the light bar 134 the circuit boards 196a-196e in the embodiment of FIG. 8 are replaced with a single board 230. The circuit board 230 in FIG. 9 provides similar functionality to the circuit boards 196a - 196e in FIG. 8. Like the multiple boards of the embodiment in FIG. 8, the ground plane of the board 230 separates the interior space of the light bar into top and bottom sections. The electromagnetically noisy warning lights are contained in the bottom section of the light bar and substantially electromagnetically isolated by the ground plane from the sensitive modules mounted on the top surface of the board facing the top section of the interior space of the light bar.

In yet another embodiment of the light bar 134, the upper housing 200 includes a solar panel 228 for providing power to the electrical device in the light bar. The solar panel 228 can be integrated into the upper housing 200 or separately attached to the housing. The solar panel 228 directly provides power to the light bar 134 or alternatively it works in conjunction with the battery 165. If a fuel cell is included as one of the power sources, the solar panel powers electrolyzers for hydrogen production. The hydrogen is then used as a fuel for the fuel cell. Power sources for the light bar 134 will be more fully described hereinafter.

Electromagnetic interference ("EMI") is caused by changes to electrical signals. EMI can induce unwanted electrical signals in other circuits, which are commonly referred to as noise. Rapidly changing signals produce EMI in frequency regions that potentially are in the same frequency domain as desired communications and data signals. Additionally, higher power signals produce stronger EMI. Physically moving sensitive circuitry away from sources of EMI tends to mitigate the effect of the EMI on the circuitry. However, with the electrical modules integrated into the light bar 134, these circuits do not benefit from the attenuation of the EMI brought about by the physically distance from the EMI source. Warning lights quickly turning on and off, electric motors and high power requirements all contribute to EMI. Sensitive electronics do not operate efficiently in the presence of EMI. For example, digital clock speeds must be reduced in order to ensure proper operation of circuits. Transceivers loose both data range and data rate because of EMI.

FIG. 10A, FIG. 10B and FIG. 10C show appropriate methods of minimizing EMI within the light bar 134. Figs 10A - 10C illustrate three alternative shielding methods for creating an electromagnetically quite area in the top section of the light bar, which is hospitable to the electronic modules. FIGS. 10A and 10B illustrate ground planes in circuit boards that function to create an upper section of the light bar 134 that is substantially isolated from the EMI generated from the warning lights in the bottom section. The circuit boards can be made with various materials. One common material is Flame Resistant 4 ("FR-4"). FR-4 is a fiberglass material with a resin epoxy. FIGS. 10A and 10B show the construction of two alternative boards for the light bar 134 illustrated in FIGS. 1-9.

The board in FIG. 10A is made of FR-4 material, but other board materials may be used. In the illustrated board of FIG. 10A, there are five (5) layers with layer 5 representing the bottom of the board on which the warning light assemblies 172 and LEDs 174 are mounted. Any additional components needed by the light assemblies and LEDs, such as resisters and capacitors and the necessary board traces are on layer 5. Layer 4 contains the power plain. The power plane can contain both digital and analog islands as needed to minimize noise. Layer 3 is the signal plane. The signal plane is isolated from the warning light assemblies 172 by the power plane 234. Further, the signal plane is isolated from the modules 110 - 132 mounted on the top of the board by the ground plane in layer 2. Thus, inherently sensitive, high-speed signals can be routed on layer 3 and shielded from noisy components on the top and bottom of the board. Layer 1 is the top of the board where the modules 110 - 132 are mounted. Many of the modules require a relative quiet EMI environment. For example, EMI can result in the radar unit 110 returning incorrect speeds for passing vehicles. The video recorder 120 may not record a clean image if excessive EMI is present. Finally, the transceivers 124, 128 and 130 need a quiet EMI environment to maximize both their range and data rate. The ground plane in layer 2 238 provides necessary isolation for the modules 110 - 132 without the need to additional shielding.

FIG. 10B represents the cross sectional view of a board made of Anotherm^{™} by TT Electronics PLC. The board material 242 acts as a natural ground plane. Therefore, the modules 110- 132 mounted on the top of the board 244 are isolated from the light assemblies 172 mounted on the bottom of the board 246.

FIG. 10C illustrates an additional or alternative grounded shielding plane 248 for the modules, particularly antennas 204, 216 and 226 connected to the transceivers 202, 212 and 222. The grounded shielding plane 248 may be required as additional grounding for the antennas depending on the specific configuration of warning light assemblies 172 and modules 110 - 132. The ground plane 248 should be made of a conductive material and for the best isolation, the plane should substantially cover the surface of the circuit boards 196a - 196e. Other methods of minimizing interference due to EMI can be utilized. For example, electrical filtering such as high/low pass filters may be added. The modules most sensitive to EMI may be housed or wrapped in grounded shielding. The most sensitive electronic devices can also be physically located as far apart as possible from the noisiest sources of EMI.

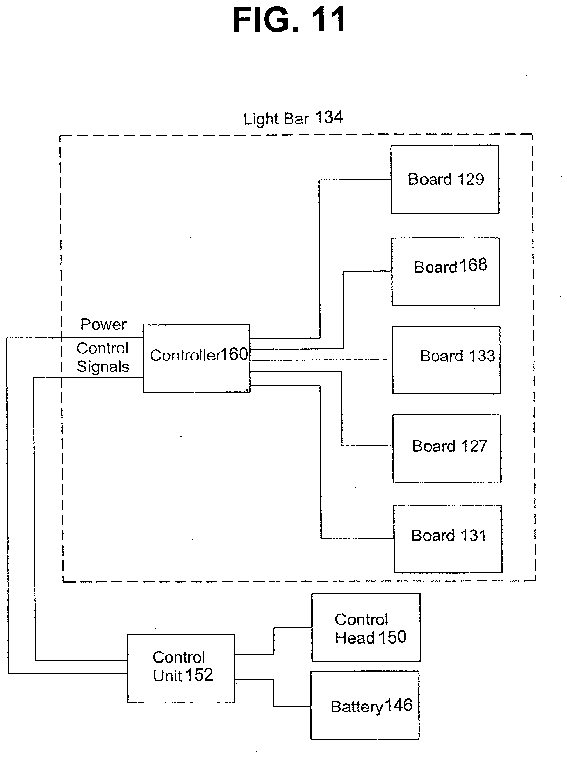

Referring to FIG. 11, each of the circuit boards 127, 129, 131 and 133 includes a connector substantially like the connector 178 of circuit board 168 in FIG. 7 that mates to a connector 180 of a cable 182 communicating power and control signals to the circuit board. As best seen in FIG. 4, the circuit board of the controller 160 includes a connector for coupling to a cable from each of the circuit boards 168, 127, 129, 131 and 133 that are populated with light beam assemblies. Thus, the circuit board for the controller 160 includes five connectors for coupling to five cables from the five circuit boards 168, 127, 129, 131 and 133. A sixth connector on the circuit board of the controller 160 connects to a cable from the control unit 152 that delivers power and control signals to the light bar 134.

Referring to FIG. 11, the controller 160 interprets a serial stream of input data generated by keystrokes to the keyboard of the control head 150. The serial data includes information identifying one of several available flash patterns for one or more of the light beam assemblies. The flash patterns are stored as data in a memory in the controller 160.

The RS485 transceiver sends and receives balanced, digital signals through the RJ45 connector. The transceiver takes the difference of the received signals and passes the result to the main microcontroller and the Signalmaster^{™} microcontroller in the form of a single ended digital data stream. The Signalmaster^{™} microcontroller is a product of Federal Signal Corporation of Oak Brook, Illinois, U.S.A.

Based upon the data received in the stream, each of the microcontrollers in FIG. 12 acts based upon embedded software. Examples of functions performed by the microcontroller include sending serial flash pattern streams to the shift registers to create a preprogrammed flash pattern. Other examples include powering down the light bar's circuitry to minimize parasitic current when the system is not being used.

The shift registers store the pattern data for each clock cycle and output a digital control signal to the LED drive circuitry. This control signal tells the LED circuitry to activate the LEDs or keep them in an OFF state. Combinations of these digital control signal streams going to multiple heads/LED drive circuits create the random or synchronized visual light patterns commonly seen in the patterns created by light bars.

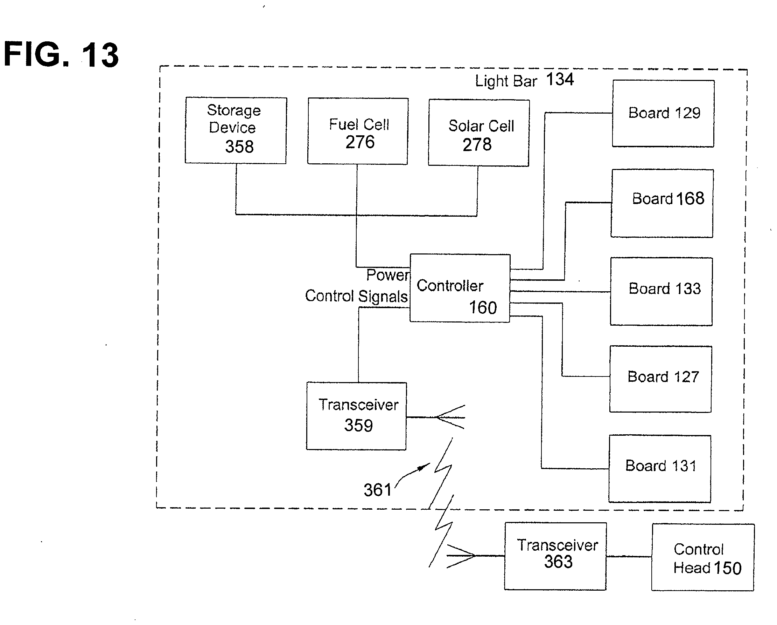

Power to the circuit boards is preferably provided by power sources local to the light bar 134, thereby eliminating the need to provide a power cable from the vehicle 136 to the light bar 134. For example, as illustrated in FIG. 13, one or both of a fuel cell 276 and an array of solar cells 278 generate sufficient energy to power all of the electronics in the light bar 134. A suitable hydrogen fuel cell is Nab II available from Jadoo Power Systems of Folsom, California, U.S.A., and suitable solar cells are available from BP Solar of Warrenville, Illinois, U.S.A. The fuel cell 276 is mounted to an interior space of the light bar 134, whereas the array of solar cells 278 is mounted to an external surface of the light bar such as the top section 19d of the housing 19 in FIGS. 1, 8 and 11. Of course, both the fuel cell 276 and the array of solar cells 278 can be located elsewhere and even on the vehicle 136 itself.

There may be times when the solar cells 278 produce energy that is not immediately used by the light bar 134. In those situations, an energy storage device 358 stores the energy so that it can be later used by the light bar. For example, the solar cells may produce more energy than used by the light bar during a sunny day. That unused energy is stored in the storage device 358 and used when the solar cell is unable to provide sufficient power such as in the evening or during cloudy day conditions. Of course, the fuel cell 276 can also supplement the solar cells, but it cannot be easily charged with the unused energy from the solar cells 278, thus requiring a storage device 358 such as a battery or the previously identified ultra capacitor. In order to orchestrate the storage of energy and the delivery of the energy to the light bar from among the three sources of the fuel cell 276, the array of solar cells and the storage device, an appropriate power supply circuit switches among or blends the energy from these sources. The power supply circuit can be made part of the controller 160 or constructed separately.

As a further alternative, the light bar 134 can be made completely wireless by providing a transceiver 359 (FIG. 13) with the controller 160 so that the control signal from the control head 150 are delivered to the controller 41 as electromagnetic signals 361, which are preferably short range radio frequency signals. The control head 150 provides its control signals to a transceiver 363, which broadcasts the control signals as low power RF signals to the transceiver 359. For example, the electromagnetic link 361 between the controller 150 and the control head 150 may be in accordance with the well known Bluetooth protocol, which is maintained by the Institute of Electrical and Electronic Engineers (IEEE) as its 802.15.1 standard. However, those familiar with low power RF communications will appreciate that many other communications protocols can be used, including other IEEE standards. Those skilled in the art of short distance wireless communications will appreciate that a receiver may be substituted for the transceiver 359 if the communications path is one way between the control head 150 and the controller 160. Likewise, a transmitter may be substituted for the transceiver 363.

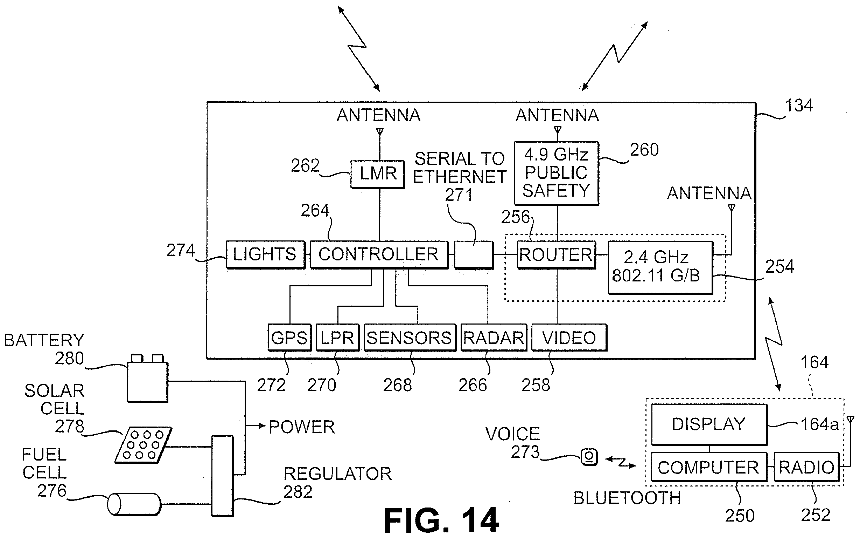

FIG. 14 is a schematic diagram of the circuitry in the light bar 134 with fuel cell 276 and solar cell 278. In the schematic diagram, the fuel cell 276 and solar cell 278 each feed a regulator 282. The regulator maintains a constant voltage to the light bar 134. The solar cell 278 charges the battery 280 so that the light bar can keep operating in dim light and at night.

The MDT 164 accepts signals via a Bluetooth IEEE 802.15 network. In one embodiment of the light bar, the signals include voice commands and voice messages broadcast over a network. Data broadcast over the network may be broadcast over the LMR 262 or either of the transceivers 254 and 260. A variety of companies including Motorola and Nokia make appropriate Bluetooth headsets 273. A user wears a hands free headset 273 so that commands are issued without distracting from the user's other duties and activities.

The MDT 164 includes a display 164a. Preferably, the display is a touch screen as discussed above in connection with FIG. 3 so that the user can enter commands by simply touching the screen. However, other types of displays can be substituted for the touch screen or may complement it. For example, a conventional liquid crystal display can be used as the display 164a. A computer 250 controls the display 164a, provides a keyboard for entering commands and receives commands and voice messages from the Bluetooth headset 273. The computer 250 transmits commands and receives messages from the emergency device 102 in the light bar 134. In one embodiment of the light bar 134, the computer 250 uses a transceiver 252 compliant with the IEEE 802.11 specification for transmitting data to the light bar 134 over a Wi-Fi network. In one embodiment of the invention, the display 164a, computer 250 and radio 252 are integrated into a single laptop computer acting as the MDT 164 as illustrated in FIGS. 1 and 2B.

The light bar 134 receives commands from the MDT 164 over a Wi-Fi network. The transceiver 254 connects to a router 256, which forwards data packets from the transceiver 254 across the network. The router 256 is of conventional design and may be any of several commercially available models. For example, the MDT 164 issues a command for the video camera 258 to begin recording. The command is transmitted to the light bar 134 and received by the transceiver 254. The transceiver sends the data to the router. The video camera 258 has an Ethernet port conforming to the IEEE 802.3 protocol. The camera 258 connects directly to the Ethernet router 256 using a standard Ethernet cable. The router thereby forwards the command issued by the MDT 164 to the camera 258. In response to the command, the camera 258 begins recording. Additionally, the camera 258 sends the video signal to the MDT 164 via the router 256 and the transceiver 254. The MDT 164 displays the live video feed on the display 164a. Other devices with an Ethernet port, such as the public safety radio 260 connect directly to the router. In one embodiment of the light bar 134, all modules contain an Ethernet port for direct connection to the router 256.

The light bar 134 receives commands from the MDT 164 over a Wi-Fi network. The transceiver 254 connects to a router 256, which forwards data packets from the transceiver 254 across the network. The router 256 is of conventional design and may be any of several commercially available models. For example, the MDT 164 issues a command for the video camera 258 to begin recording. The command is transmitted to the light bar 134 and received by the transceiver 254. The transceiver sends the data to the router. The video camera 258 has an Ethernet port conforming to the IEEE 802.3 protocol. The camera 258 connects directly to the Ethernet router 256 using a standard Ethernet cable. The router thereby forwards the command issued by the MDT 164 to the camera 258. In response to the command, the camera 258 begins recording. Additionally, the camera 258 sends the video signal to the MDT 164 via the router 256 and the transceiver 254. The MDT 164 displays the live video feed on the display 164a. Other devices with an Ethernet port, such as the public safety radio 260 connect directly to the router. In one embodiment of the light bar 134, all modules contain an Ethernet port for direct connection to the router 256.

Devices without an Ethernet port connect to a controller 264. The controller 264 interfaces with each module and a serial to Ethernet converter 271, which provides an interface between the controller and the router 256. The converter 271 translates data packets forwarded by the router 256 and then the controller 264 sends commands to each of the connected modules, which include in the illustrated embodiment the radar unit 266, biological and chemical sensors 268, the LPR 270 and the GPS 272. The controller 264 also interfaces with the warning light assemblies 274. For example, a user turns on the lights by way of commands entered at the MDT 164. The MDT sends the command over the Wi-Fi network to the transceiver 254. The transceiver forwards the data to the router 256 and the router forwards the data packet to the converter 271, which in turn provides serial commands to the controller 264. The controller 264 interprets the serial commands and turns on the lights 274. Similarly, a user controls the GPS 272, LPR 270, sensors 268 and radar 266 from the MDT 164. Likewise, modules send data to the MDT 164. For example, the radar 266 detects the speed of nearby vehicles. The radar sends the speed data to the controller 264, which outputs a serial data stream to the converter 271. The converter 271 formats the speed data as an Ethernet data packet and sends the packet to the router 256. The router forwards the packet the transceiver 254 where it is sent over the Wi-Fi network to the MDT 164. The MDT formats and displays the speed. A user thereby receives real time information on the speeds of nearby vehicles.

The controller 264 also interfaces with the land mobile radio (LMR) 262. Voice and data messages from either the light bar or the MDT are sent over the LMR 262 or the public safety radio 260. Additional transceivers are added to the system for connecting to additional networks, such as a cellular telephone network or a community Wi-Fi mesh network among others. Additional modules may be housed in the light bar 134 and modules may be removed from the light bar 134 as necessary for a given expected emergency. By way of example, controller 264 may be a Terra3 Intelligent RTU (Remote Terminal Unit) from Federal Signal Corporation, Oak Brook, Illinois, U.S.A.. The converter 271 may be a TS900 Series serial to Ethernet converter by Ether-WAN Systems, Inc., Via Rodeo, Placentia, California 92870, U.S.A.

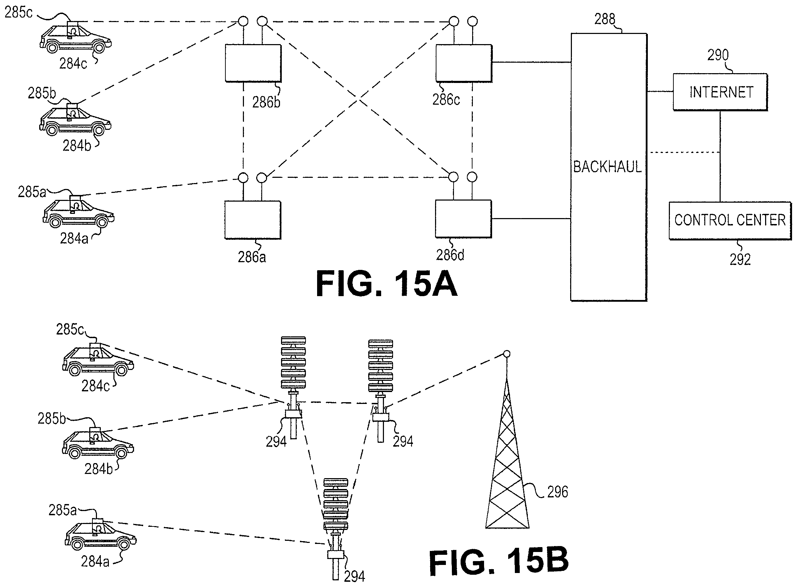

FIG. 15A depicts a community Wi-Fi mesh network for use by one embodiment of the light bar 134. Towers 286a, 286b, 206c and 286d act as nodes within the mesh network, routing data as needed among themselves and to the backhaul system 288 for connection to the Internet 290. Various devices with Wi-Fi capabilities can connect wirelessly to the mesh network thru the towers 286. Vehicles 284a, 284b and 284c are each equipped with a light bar 285a, 285b and 285c, respectively, as described above. Each of the light bars connects to the Wi-Fi mesh network using an 802.11 compliant transceiver in the light bar 285. Using the MDTs in the vehicles 284, occupants of the vehicles send data to the control center 292. In one embodiment, vehicle 284a records live video with a video module in light bar 285a. The occupant of vehicle 284a sends the live video feed over the Wi-Fi network using a transceiver in the light bar 285a. The transceiver connects to tower 286a and the video feed is forwarded to the backhaul system 288. The backhaul delivers the video feed to the control center 292 either directly or via the internet 290 as indicated in FIG. 11A. The U.S. patent application no. 11/505,642, filed August 17, 2006, now issued as U.S. Patent No. 7,746,794, and entitled "Integrated Municipal Management Console" depicts one embodiment of the control center. In keeping with the description in the '794 patent, personnel in the control center 292 view the live video feed from vehicle 284a and alert or marshal resources as needed. Alternatively, the control center can enable the camera in the light bar 285a remotely.

In another embodiment of the system supporting the light bar, a video feed from light bar 285a is sent to the MDT in vehicle 284b. In a first embodiment the video feed is sent from light bar 285a to the control center 292. The control center 292 then forwards the video feed over the internet 290, backhaul 288 and nodes 286 to the light bar 285b. Light bar 285b transmits the live video feed from 285a to the MDT in vehicle 284b. The occupant of vehicle 284b can therefore see a live image of the video feed taken by light bar 285a. In yet another embodiment of the system supporting the light bar, the live video feed is sent directly from light bar 285a over the Wi-Fi mesh network to light bar 285b. The video feed is then sent to the MDT in vehicle 284b where the occupant of the vehicle views it. Any data from a module can be sent over the network to the control center or to other vehicles. Voice messages using VoIP or traditional voice networks can also be sent from a vehicle to the control center and from the control center to a vehicle or from a first vehicle directly to a second vehicle. Further, the control center can send any appropriate data for display on the MDT or for announcement by a vehicle's built in speakers or through a user's Bluetooth headset.

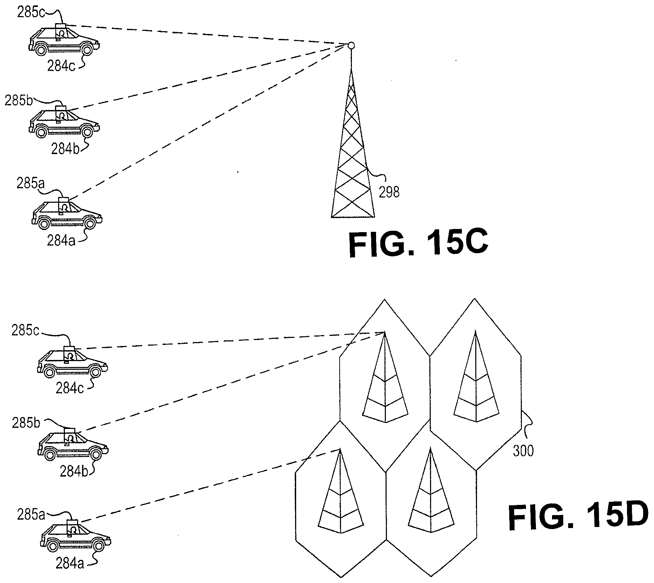

In one embodiment of the invention depicted in FIG. 15B, outdoor warning sirens 294 act as nodes in a Wi-Fi mesh network allowing vehicles 284a, 284b and 284c to connect to the network. The outdoor warning sirens 294 connect to a tower 296. The tower 296 provides further access to the backhaul, internet or other appropriate network for connecting to a control center. In keeping with one embodiment of the invention, FIG. 15C depicts a point to multipoint network with vehicles 284a, 284b and 284c connecting directly to tower 298 that provides access thru an appropriate network connection to a control center. In another embodiment of the invention, depicted in FIG. 15D, vehicles 284a, 284b and 284c connect to a cellular network 300. The cellular network 300 provides access to a control center. FIGS. 15A, 15B, 15C and 15D illustrate possible network protocols and configurations. Embodiments of the invention utilize any appropriate wireless network protocols and network configurations for connecting emergency device 102 to a control center.

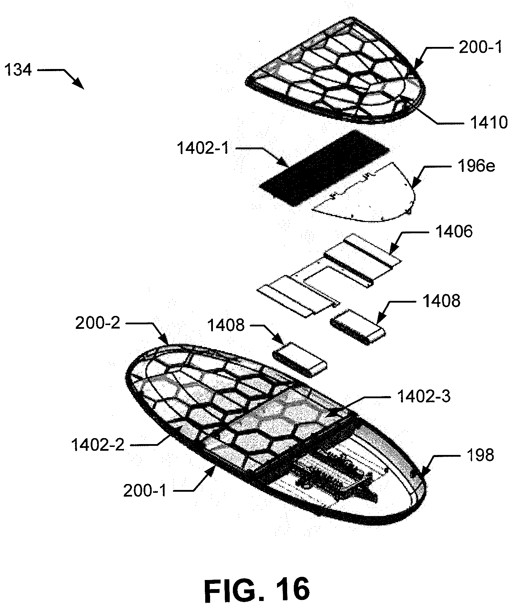

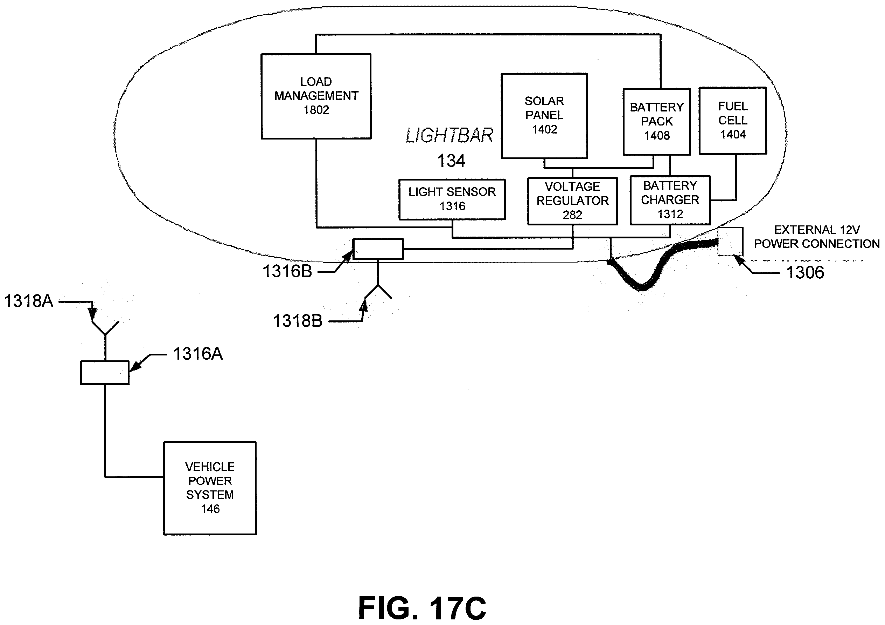

In keeping with the embodiment of the light bar where the power source is integrated within the light bar, the power source includes at least a solar panel and a rechargeable Lithium-Ion battery pack as illustrated in FIGS. 16 and 17. The solar panel and the rechargeable Lithium-Ion battery pack are used alone or in combination to provide power to the light bar components described above.

Referring to FIGS. 16 and 17, the light bar 134 includes one or more solar cells 1402 arranged on a solar panel and one or more battery packs 1408, which are controlled by a control switch 1304. For example, the solar cells 1402 can be those manufactured by PulseTech Products Corporation, 110 South Kimball Ave., Southlake, Texas 76092, USA, and the battery packs 1408 can be Lithium-Ion battery packs manufactured by Applied Power Inc, 111 Summit St., Brighton, Michigan 48116, USA. The control switch 1304 is of conventional design and can be custom designed or purchased from a suitable vendor. The battery packs 1402 may be recharged by way of a connector 1306 mounted to the exterior of the light bar to allows a 12 volt power supply to plug to the connector 1306 and charge the batteries 1408 through an internal battery charger 1312 as described in more detail hereinafter. The battery charger 1312 is suitable for charging batteries 1408 of various types, such as Lithium-Ion batteries. One such charger is available from AstroFlight, 13311 Beach Ave Marina, Del Rey, California 90292, U.S.A. Lithium-Ion batteries need not be the only type of battery 1408. Batteries 1408 must have an appropriate storage capacity, voltage and current specification for driving the electrical devices contained within the light bar 134 such as warning lights. Preferably, the batteries have a capacity to provide for approximately 12 hours of continuous driving of LED-based warning lights housed within the light bar 134. Lithium-Ion batteries are preferred because of their high density, compact size, and fast charging rate.

In a further embodiment, the light bar 134 may include a fuel cell 1404 as an additional internal power source. The fuel cell maintains its charge for a much longer time period then the internal batteries. Fuel cell 1404 can be used to power the light bar directly or can be used to recharge the battery pack 1408.

In still a further embodiment, the light bar 134 has four warning light heads with following configurations:

| **Four-Head Warning Light Power Requirement** |
|---|
| 4 Watts x 4 heads x 12 hours = 192 Watt-hours |

| **Lithium-Ion Battery-Pack System** |
|---|
| 5 packs x 6 cells x 7.6 Watt-hours = 228 Watt-hours |
| Power Conversion Efficiency = 85 % |
| Available Watt-hours = 228 Wh x 85 % = 193.8 Watt hours |

| **Extra Power Margin from Solar Panels** |
|---|
| 4 panels x 6 Watts x 4 hours = 96 Watt-hours |

An embodiment of a light bar 134 configured as described above was tested on July 1-2, 2009. The solar panels 1402 were disconnected. A 4-head light bar prototype was equipped with five (5) Li-ion battery packs charged to full capacity. The test started at 2:25 pm on July 1 and continued for four hours, at which point it was interrupted for the night. The test was resumed at 6:00 am on July 2, without battery re-charge, and continued for eight hours. At the end of test the remaining battery charge was at a safe level (within the battery recommended specification).

A test was performed on July 6, 2009. The solar panels were providing power to the light heads, which diminished the power demand from the battery packs. The test was taken in University Park, IL, at full sun with the light bar placed horizontally, oriented in the East-West direction.

| **Time** | **Percent of Solar Power vs. Total Power demand** |
|---|---|
| 11:00 a.m. | 59 % |
| 12:00 | 61 % |
| 1:00 p.m. | 60 % |
| 2:00 p.m. | 19 % with cloud coverage |
| 2:10 p.m. | 62 % |
| 3:10 p.m. | 54 % |
| 4:05 p.m. | 20 % with cloud coverage |
| 4:10 p.m. | 44 % |

Figure 16 shows an exploded view of the light bar 134 having solar panels 1402-1, 1402-2, and 1402-3, and Lithium-Ion battery packs 1408. The solar panels 1402-1, 1402-2, and 1402-3 are illuminated through the transparent top domes/housings 200-1, 200-2, and 200-3. The top domes 200-1, 200-2, and 200-3 can be made into a single component or three separate pieces as illustrated. Solar panel 1402-1 is shown as part of the exploded assembly, whereas solar panels 1402-2 and 1402-3 appear as gray shaded images under the domes 200-2 and 200-3, respectively.

The Lithium-Ion battery packs are distributed in different locations inside the light bar. They are accessible in end sections of the light bar under the inner board panels 196(b) and 196(d), with connections via terminated wires that plug into terminals on the inner boards 196(c) (on both sides of the light bar). It is important to follow the exact connections and locations of the original battery packs when performing the replacement. Additional battery packs may be located in the center sections of the light bar under the center panels 1402-2, with the wires connecting to the inner ROC boards in the adjacent end section of the light bar.

In addition, the top domes 200-1, 200-2, and 200-3 include lens structures (honey comb structures) 1410 for converging the sun light onto the solar panels for improved efficiency. For example, each cell in the honeycomb structure can be a Fresnel lens formed from the material of the domes for directing ambient sunlight to the solar panels.

The solar panels 1402-1, 1402-2, and 1402-3 are attached to the bottom of the top domes 200-1, 200-2, and 200-3. To accommodate the Lithium-Ion battery packs 1408, the circuit board 196(b) and 196(d) in FIG. 8 are replaced with the battery support structures 1406, where the Lithium-Ion battery packs 1408 are attached to the bottom of the battery support structures 1406. As an alternative, the support structures 1406 supports both the battery pack 1408 and the solar panel 1402-1, 1402-2, and 1402-3.

Lithium-Ion battery packs are distributed in different locations inside the light bar. They are accessible in end sections of the light bar under the inner board panels 196(b) and 196(d), with connections via terminated wires that plug into terminals on the inner boards 196(c) (on both sides of the light bar). It is important to follow the exact connections and locations of the original battery packs when performing the replacement. Additional battery packs may be located in the center sections of the light bar under the center panels 1402-2, with the wires connecting to the inner ROC boards in the adjacent end section of the light bar.

Turning to FIG. 17, the solar panels 1402 and on-board battery packs 1408 are connected by a voltage regulator 282 of conventional design for powering various components of the light bar 134. The internal battery packs 1408 are also connected to an internal Lithium-Ion battery charger 1312 via a two conductor connector 1306 outside the light bar housing. Those skilled in the art of batteries and battery chargers will appreciate that the charger 1312 most be designed specifically for charging Lithium-Ion batteries. The light bar control box 1304 connects with the light bar 134 via a four conductor cable 1310. It also connects with the vehicle power system 146 via a provided cigarette plug 1302.

The control box 1304 has a three position switch 1314. Position one (1) indicating "Self Power" turns the light bar 134 on using its on-board battery/solar power (1402 and 1408). Position two (2) indicating "Off" (neutral) turns the light bar 134 off and charges the vehicle battery 146 via the cigarette plug 1302 when adequate illumination is available on the solar panels 1402. Position three (3) indicating "Chassis Power" turns the light bar 134 on using the vehicle power 146. In a further embodiment, switch 1314 may has a fourth position, e.g., position (4), indicating "Fast Charging" connects battery charger 1312 to the external power source through connector 1306 so as to fast charge battery pack 1408.

From the light bar assembly 134, one or more cables 1310 are routed into the vehicle's cabin near the location of the power control switch 1304. The one or more cables 1310 are then connected to the light bar power switch 1314. The cigarette plug 1302 from the light bar power switch 1304 is plugged into the vehicle cigarette plug receptacle through cable 1308. The cables 1310 includes one or more power lines and signal lines that carries either the charging current or control signals to the light bar assembly.

When the vehicle power system 146 is used to provide trickling charging of the battery pack 1408, the cable 1310 can be made very thin because the charging current and signals are small, thereby making it very easy to route the cables 1310 from the cabin to the light bar assembly.

As mentioned above, a control switch 1304 is provided with the system. Referring to FIG. 17, the control switch 1304 is a three position switch 1314:

| **Switch Position** | **Function** |
|---|---|
| 1 | Light bar ON using its on-board power |
| 2 | Light bar OFF/Trickle charge vehicle battery when solar panels have adequate illumination |
| 3 | Light bar ON using vehicle chassis power |

In one embodiment of the invention, the control switch 1304 is a manually operated, single-pull switch of conventional construction. The manual switch 1314 allows an operator or user of the light bar 134 to select the power source from among the solar panel 1402, the battery pack 1408 and the external power source. Because it is manually operated, the switch is preferably located within the passenger compartment of the vehicle in order to provide easy access for the vehicle operator, who is typically a first responder when the vehicle is an emergency vehicle such as a police or fire vehicle.

A cigarette-plug connection to the vehicle chassis power is provided. In the switch positions One and Two, no current is drawn from the vehicle chassis. In position Two, the vehicle battery is trickle charged through a diode that bypasses the switch and prevents current flow in the opposite direction. For example, when it is switched to position 2, control switch 1304 sends a control signal to the battery charger 1312 to start trickling charging the battery pack 1408. In this embodiment, the battery charger 1312 includes trickling charging circuit to draw small currents from vehicle power system 146 so as to charge battery pack 1408. Because the current used to trickle charge the battery can be very small, the wires in cable 1310 and 1308 for carrying the charging current can be made very thin and easy to install. The battery charger provides trickle charging in a conventional manner.

In an alternative embodiment, switch 1314 can have a fourth position for charging the battery using external power source connected through connector 1306. In this embodiment, battery charger 1312 can be switched to provide regular charging of battery pack 1408, in response to control signals from control switch 1304. In particular, the battery charger 1312 can operate in regular and trickling charging modes. When switch 1314 is switched to position 2, battery charger 1312 operates in the trickling charging mode as described above. When switch 1314 is switched to position 4, battery charger 1312 operates in the regular charging mode and draw charging currents from an external power source through connector 1306.

Each LED warning light head of the light bar 134 can be amber, blue, or red. The light head (e.g., 172 in FIG. 7A) has a replaceable reflector and the front dimensions of the projecting light are for example 1.6" in height and 3.4" in width. The light bar frame has a modular design in keeping with the construction illustrated in FIGS. 4 and 6-10, including end modules 196a and 196e, a center light-bar module 168, and two boards 196b and 196d. Each of board 196b and 196d includes two (2) LED heads integrated with optical reflectors and electronic drivers. The light bar 134 also includes replaceable LED reflectors (e.g., see FIG. 7A), two (2) inner boards, power converters, a light-bar controller, five battery-pack modules with Li-ion cells, four solar-panel modules; and shore charger module 1306 (FIG. 17).

As shown in FIG. 17, the solar light bar system includes a light bar 134, a light-bar mount, a control switch 1314 with wires, and a cigarette plug 1302. The light bar assembly 134 contains all the systems necessary for operation and can be shipped pre-wired to its control switch 1314. The only wiring connection with the vehicle is via a provided cigarette plug 1302. The control wires provided with the system can enter the cabin via a vehicle's door seal for easy installation. The control switch 1314 can be Velcro-mounted in the cabin if desired. The mount for the light bar is described in FIGS. 5A and 5B and is easily portable between vehicles.

The light bar system shown in Figure 16 meets the SAE J845 Class 1 specification for light output. It can operate for 12 hours on its own Lithium-Ion battery packs and solar power. Preferably, the light bar system does not draw any power from the vehicle electrical system during normal operation, unless it is deliberately switched to chassis power. If the lights are not operating and the solar panels have adequate illumination, the solar panels automatically charge the vehicle battery.

Operating controls are provided by three-position switch 1314, including (1) on self-power, (2) off and charge, and (3) on chassis-power. The system has a shore power connector 1306, rated at 12V DC and 6 Amps, to connect to the on-board battery charger 1312. Amber, red, and blue LED modules are available from Federal Signal Corporation, each meeting appropriate color specifications per SAE J578. LED light heads are mounted on easily exchangeable modules. Multiple flash patterns are easily selectable. The system is modular and self contained, with all components, except for switches 1314 and mounts, contained in one housing. The vehicle roof mounts of FIGS. 5A and 5B fit a variety of vehicles. The size of the system is that of a standard Arjent light bar manufactured by Federal Signal Corporation. Wiring complies with the General Technical Requirements of the Arizona Solicitation T09-19-00011.

In the embodiment of the present invention, an external power source is connected to the light bar 134 for providing power in addition to the integrated internal solar panel 1402 and the battery pack 1408. For example, when the light bar 134 is mounted on a police patrol vehicle, the battery 146 of the police vehicle may provide an external power source for powering the integrated light bar. The vehicle battery 146 can be connected to the integrated light bar by way of hard wiring or tapping, or through a cigarette plug 1302 connected to the light bar.

In an alternative embodiment, the light bar system includes a control circuit for trickle charging the light bar battery pack 1408 during normal operation of the vehicle. The trickle charging can be provided through either a wired or wireless connection. The advantage of trickle charging is that the batteries potentially never have to be plugged into a charger off of the vehicle. When the solar panel 1402 is used to charge the batteries, they can be supplemented by a trickle charge capability provided by the vehicle's electrical system that enables the battery pack 1408 to drive the light bar indefinitely.

Depending on the environment, the solar cells 1402 can provide much of the recharging of the batteries 1408. But even in the sunniest of environments, the solar cells 1402 may not be enough to keep the batteries 1408 fully charged. However, normal operation of the vehicle will produce enough excess electrical capacity to reliably trickle charge the batteries 1408. The trickle charging circuit draws power from the vehicle's electrical system and provides a continuous constant-current charge at a low rate which is used to complement the solar cell 1402 to maintain the battery 1408 in a fully charged condition.

As shown in FIG. 17, the control switch 1314 includes circuitry to draw small currents from the vehicle battery 146 for trickle charging the light bar batteries 1408. In this embodiment, the connection is wired between the light bar batteries and the vehicle engine and the wire can be relatively thin because the current draw is low. This greatly simplifies installation.

Alternatively, trickle charging of the battery pack 1408 is provided through wireless energy transfer. For example, the battery charger 1312 in the light bar system shown in FIG. 17 includes a near field induction charging capability and charges the battery pack 1408 through induction. In particular, the charger 1312 includes a transformer 1316 formed by a primary coil 1316A and a secondary coil 1316B. The transformer 1316 includes uses the primary coil 1316A to create an alternating electromagnetic field from within the passenger compartment. The secondary coil 1316B is disposed within the light bar assembly or connected to the outer surface of the light bar housing and in proximity to the primary coil. The secondary coil 1316B takes power from the electromagnetic field and converts it back into electrical current to providing charging current to the battery charger 1312 so as to trickle charging the battery pack 1408. In order to prevent interference by the metal parts of the vehicle roof sitting between the primary coil and the second coil may be cut away.

In the embodiment of the present invention as shown in FIG. 17A, the primary coil 1316A and the secondary coil 1316B may be separated at a greater distance. For example, the secondary coil 1316B is disposed within the light bar assembly or close to the light bar assembly on the vehicle roof, and the primary coil 1316A is attached to the outer surface of the engine hood and draws power from the vehicle electrical system. In this embodiment, the energy transfer is provided by strong coupling between the electromagnetic resonant coils 1316A and 1316B. The primary and secondary coils 1316A and 1316B include magnetic loop antennas tuned to the same frequency. Due to operating in the electromagnetic near field, the secondary coil is no more than about a quarter wavelength from the transmitter.

In still another embodiment, the wireless trickle charging of the battery pack 1408 is provided by far field wireless energy transfer as shown in FIG. 17B. In this embodiment, the secondary coil 1316B is disposed within the light bar assembly and the primary coil 1318A is attached to the outer surface of the engine hood and draws power from the vehicle electrical system. In order to increase the efficiency of the system, the primary coil 1318A is provided with high directivity antennas 1318A that makes the electromagnetic radiation of the system to match the shape of the receiving area thereby delivering almost all emitted power to the secondary coil 1316B. On the receiving side, the secondary coil 1316B may be equipped with a receiving antenna 1318B for receiving the energy transmitted through electric-magnetic radiation from antennas 1318A.

In a further embodiment, the connection between the control switch 1304 and light bar assembly 134 can be made completely wireless. The control signals can be transmitted through wireless transceiver and receiver and the trickle charging can be provided through induction as described above. In this embodiment, no wiring is required for installing the light bar.

Referring to FIG. 17, in a still further alternative embodiment, the control box 1304 includes an automatic control module for selecting the power source among the solar panels 1402, the integrated battery packs 1408, and the external power source 146. Specifically, the automatic control module 1304 detects the environmental conditions such as the lighting/illumination condition surrounding the light bar 134. If the environmental condition is below a certain threshold, the automatic control module 1304 then controls the switch 1314 to allow the light bar 134 draws power from the integrated Lithium-Ion battery 1408 or the vehicle battery 146. If the environmental condition is above a certain threshold, the automatic control module 1304 then controls the switch 1314 so that the light bar 134 is powered solely by the solar panel 1402. As another example, if the illumination onto the solar panel 1402 is sufficiently strong, the automatic control module 1304 controls the switch 1314 so that the Lithium-Ion battery 1408 is recharged by the solar panel 1402. If the illumination is weak and the Lithium-Ion battery 1408 is running low, the automatic control module 1304 controls the switch 1314 so that the light bar 134 is powered by the vehicle battery 146, while the Lithium-Ion battery 1408 is also recharged by the vehicle battery 146. If the illumination is sufficiently strong, the automatic control module 1304 controls the switch 134 so that the vehicle battery 146 is recharged by the solar panel 1402.

In order to switch among the power sources, the light bar 234 includes a light sensor 1316 for detecting the illumination condition. Alternatively, the automatic control module 1304 includes a voltage/current monitoring circuit for monitoring the voltage or current output by the solar panels 1402 and the Lithium-Ion battery packs 1408.

In still another embodiment as shown in FIG. 17C, light bar 134 is provided with an on-board automatic load management module 1802 to replace the control switch 1304 for managing the charging of the battery. In this embodiment, light bar assembly 134 can be made completely wireless because the wired connection and control switch 1304 between the vehicle power system 246 and light bar assembly 134 is no longer required. As described above, charging of battery pack 1408 by the vehicle power system 148 is provided through wireless energy transfer between primary coil 1316A and secondary coil 1316B.

In general, load management module 1802 monitors the output voltage of battery pack 1408 and triggers various events in response to the output voltage level. Load management module 108 is similar to those described in U.S. Patent No. 6,778,078. Management module 1802 includes a programmable micro controller and its peripheral circuit components for carrying out various control functions described herein. In particular, when load management module 1802 detects that the output voltage of battery pack 1408 drops to a predetermined level, load management 1802 automatically selects one or more of the available power sources to charge the battery. For example, if the vehicle is outdoor and the illumination condition is satisfactory as detected by light sensor 1316, load management 1802 then switches and connects solar panel 1402 to battery charger 1312 so as to charge the battery. Alternatively or additionally, if the vehicle is blocked from the sun and the illumination condition is poor, load management 1802 then selects fuel cell 1404 or vehicle power system 146 to charge the battery.

As another example, when light bar 134 operates under full load and/or for a long period of time, the output voltage level of the battery may continue to drop even if solar panel 1402 or fuel cell 1404 is used to charge the battery. In this case, load management 1802 selects all of the available power sources to charge the battery. Specifically, solar panel 1402 and/or fuel cell 1404 are used to provide regular charging while vehicle power system 146 is used to provide consistent trickle charging so as to complement other sources.

Still further, when an external power source is connected to light bar 134 through connector 1306, load management 1802 detects the connection and automatically select the external power source to charge the battery and/or power the light bar assembly. If additional power sources are supplied to light bar assembly, load management 1802 can be readily modified and programmed to include those power sources and the operations are similar to those described herein.

The use of the terms "a" and "an" and "the" and similar referents in the context of describing the light bar and its network environment (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. All methods described herein can be performed in any suitable order unless otherwise indicated herein or otherwise clearly contradicted by context. The use of any and all examples, or exemplary language (e.g., "such as") provided herein, is intended merely to better illuminate the various embodiments of the light bar and does not pose a limitation on the scope of the invention unless otherwise claimed. No language in this description should be construed as indicating any non-claimed element as essential to the practice of the invention.

Preferred embodiments of the light bar and the system supporting it are described herein, including any best mode known to the inventor. Variations of those preferred embodiments may become apparent upon reading the foregoing description.

## Claims

1. A system for use by a vehicle (138) comprising:
an emergency device (102) for mounting to the vehicle (138) and housing at least one warning light (134);
a rechargeable power source (1408) disposed within the emergency device (102) for powering the at least one warning light (134);
a solar energy source (1402) for converting solar energy into electrical energy associated with the emergency device (102);
at least one connector (1306) connected to the emergency device (102) and accessible from an external surface of the emergency device (102) for connecting to a power source external of the emergency device (102) such that the external power source can charge the rechargeable power source (1408) and can complement the rechargeable power source (1408) and the solar energy source (1402) when coupled to the at least one connector (1306);
a device connecting the solar energy source (1402) and the rechargeable power source (1408) to control the flow of energy from the solar energy source (1402) and rechargeable power sources (1408) to the at least one warning light such that the energy from the solar energy source (1402) charges the rechargeable power source (1408) and powers the at least one warning light (134);
a trickle charging circuit configured to draw power from the external power source via a wireless connection, and
a control interface (164a) placeable in an interior of the vehicle (138) in communications with the emergency device (102) for controlling the at least one warning light (134).

2. The system of claim 1 wherein the control interface includes a control switch which select at least one of the rechargeable power source, the solar energy source, and the external power source to power the at least one warning light.

3. The system of claim 1 further including a battery charger for receiving power from at least one of the solar energy source and the external power source so as to charge the rechargeable power source.

4. The system of claim 3 further including a voltage regulator for regulate the power provided for the at least one warning light from at least one of the rechargeable power source, the solar energy source and the external power source.

5. The system of claim 2 further including a light sensor for sensing an illumination condition, wherein the control interface automatically performs the selection in response to the detected illumination condition.

6. The system of claim 2, wherein the control switch includes:
a first position for selecting at least one of the solar energy source and the rechargeable power source to power the at least one warning light;
a second position for turning off the emergency device; and
a third position for selecting the external power source to power the at least one warning light.

7. The system of claim 6, wherein the external power source includes a vehicle power system.

8. The system of claim 1, further including an output connector for outputting the power generated by the solar energy source.

9. The system of claim 1, wherein the emergency device further includes a housing and the solar energy source includes one or more solar panels disposed on an outer surface of the housing.

10. A method for providing energy to a vehicle-mounted emergency device (102), including:
drawing energy from a first source (1408) disposed within a housing of the emergency device (102), wherein the first source (1408) is rechargeable;
delivering the drawn power to a signaling device within the emergency device (102);
during normal operation of the vehicle, controlling a confluence of energy from the first source (1408) and a second source (1402) so that the signaling device receives all of the energy it requires to operate properly and to cause the second source (1402) to charge the first source (1408) when more energy than required by the signaling device is available from the second source (1402), and
drawing energy from a third source external of the emergency device (102) via a wireless connection to provide consistent trickle charging so as to complement the first source (1408) and the second source (1402), and
selecting the third source to trickle charge the first source (1408) so as to complement the second source (1402) during normal operation of the vehicle,
wherein the second source (1402) is a solar energy source.

11. The method of claim 10, further including detecting an illumination condition, and controlling the confluence of energy in response to the detected illumination condition.

12. The method of claim 10, further including selecting at least one of the second source (1402) and the third source to charge the first source (1408).

## Patentansprüche

1. System zur Verwendung durch ein Fahrzeug (138), umfassend:
eine Notvorrichtung (102) zur Befestigung am Fahrzeug (138) und zur Aufnahme mindestens einer Warnleuchte (134);
eine wiederaufladbare Energiequelle (1408), die innerhalb der Notvorrichtung (102) angeordnet ist, um die mindestens eine Warnleuchte (134) mit Energie zu versorgen;
eine Solarenergiequelle (1402) zur Umwandlung von Solarenergie in elektrische Energie, die der Notvorrichtung (102) zugeordnet ist;
mindestens einen Verbinder (1306), der mit der Notvorrichtung (102) verbunden und von einer Außenfläche der Notvorrichtung (102) aus zugänglich ist, um eine Verbindung zu einer Energiequelle außerhalb der Notvorrichtung (102) herzustellen, so dass die externe Energiequelle die wiederaufladbare Energiequelle (1408) aufladen und die wiederaufladbare Energiequelle (1408) und die Solarenergiequelle (1402) ergänzen kann, wenn sie mit dem mindestens einen Verbinder (1306) verbunden ist;
eine Vorrichtung, die die Solarenergiequelle (1402) und die wiederaufladbare Energiequelle (1408) verbindet, um den Energiefluss von der Solarenergiequelle (1402) und der wiederaufladbaren Energiequelle (1408) zu der mindestens einen Warnleuchte so zu steuern, dass die Energie von der Solarenergiequelle (1402) die wiederaufladbare Energiequelle (1408) auflädt und die mindestens eine Warnleuchte (134) mit Strom versorgt;
eine Erhaltungsladungsschaltung, die so konfiguriert ist, dass sie über eine drahtlose Verbindung Energie von der externen Energiequelle bezieht, und
eine Steuerschnittstelle (164a), die in einem Innenraum des Fahrzeugs (138) platzierbar ist und mit der Notvorrichtung (102) kommuniziert, um die mindestens eine Warnleuchte (134) zu steuern.

2. System nach Anspruch 1, wobei die Steuerschnittstelle einen Steuerschalter enthält, der die wiederaufladbare Energiequelle, die Solarenergiequelle und/oder die externe Energiequelle auswählt, um die mindestens eine Warnleuchte zu betreiben.

3. System nach Anspruch 1, das ferner ein Batterieladegerät zur Aufnahme von Strom von der Solarenergiequelle und/oder der externen Energiequelle umfasst, um die wiederaufladbare Energiequelle zu laden.

4. System nach Anspruch 3, das ferner einen Spannungsregler zur Steuerung der Energie umfasst, die für die mindestens eine Warnleuchte von der wiederaufladbaren Energiequelle, der Solarenergiequelle und/oder der externen Energiequelle bereitgestellt wird.

5. System nach Anspruch 2, das ferner einen Lichtsensor zum Erfassen eines Beleuchtungszustands umfasst,
wobei die Steuerschnittstelle die Auswahl automatisch als Reaktion auf die erfasste Beleuchtungsbedingung durchführt.

6. System nach Anspruch 2, wobei der Steuerschalter umfasst:
eine erste Position zum Auswählen der Solarenergiequelle und/oder der wiederaufladbaren Energiequelle zum Betreiben der mindestens einen Warnleuchte;
eine zweite Position zum Ausschalten der Notvorrichtung; und
eine dritte Position zur Auswahl der externen Energiequelle zur Versorgung der mindestens einen Warnleuchte.

7. System nach Anspruch 6, wobei die externe Energiequelle ein Fahrzeugstromsystem umfasst.

8. System nach Anspruch 1, das ferner einen Verbinder zur Ausgabe des von der Solarenergiequelle erzeugten Stroms umfasst.

9. System nach Anspruch 1, wobei die Notvorrichtung ferner ein Gehäuse umfasst, und die Solarenergiequelle eine oder mehrere Solarzellenplatten umfasst, die auf einer Außenfläche des Gehäuses angeordnet sind.

10. Verfahren zur Bereitstellung von Energie für eine an einem Fahrzeug montierte Notvorrichtung (102), umfassend:
Erhalten von Energie aus einer ersten Quelle (1408), die innerhalb eines Gehäuses der Notvorrichtung (102) angeordnet ist, wobei die erste Quelle (1408) wiederaufladbar ist;
Zuführen der erhaltenen Energie an eine Signalgebungsvorrichtung innerhalb der Notvorrichtung (102);
während des Normalbetriebs des Fahrzeugs, Steuern eines Zusammenflusses von Energie von der ersten Quelle (1408) und einer zweiten Quelle (1402), so dass die Signalgebungsvorrichtung die gesamte Energie erhält, die sie benötigt, um ordnungsgemäß zu arbeiten, und um zu bewirken, dass die zweite Quelle (1402) die erste Quelle (1408) auflädt, wenn mehr Energie als von der Signalgebungsvorrichtung benötigt von der zweiten Quelle (1402) verfügbar ist, und
Erhalten von Energie aus einer dritten Quelle außerhalb der Notvorrichtung (102) über eine drahtlose Verbindung, um eine gleichbleibende Erhaltungsladung bereitzustellen, um die erste Quelle (1408) und die zweite Quelle (1402) zu ergänzen, und
Auswählen der dritten Quelle, um die erste Quelle (1408) mit der Erhaltungsladung zu versorgen, um die zweite Quelle (1402) während des Normalbetriebs des Fahrzeugs zu ergänzen,
wobei die zweite Quelle (1402) eine Solarenergiequelle ist.

11. Verfahren nach Anspruch 10, das ferner das Erfassen einer Beleuchtungsbedingung und das Steuern des Zusammenflusses von Energie in Abhängigkeit von der erfassten Beleuchtungsbedingung umfasst.

12. Verfahren nach Anspruch 10, das ferner das Auswählen der zweiten Quelle (1402) und/oder der dritten Quelle zum Laden der ersten Quelle (1408) umfasst.

## Revendications

1. Système destiné à être utilisé par un véhicule (138) comprenant :
un dispositif d'urgence (102) destiné à être monté sur le véhicule (138) et abritant au moins un témoin d'alerte (134) ;
une source d'alimentation rechargeable (1408) disposée à l'intérieur du dispositif d'urgence (102) pour alimenter l'au moins un témoin d'alerte (134) ;
une source d'énergie solaire (1402) pour convertir l'énergie solaire en énergie électrique associée au dispositif d'urgence (102) ;
au moins un connecteur (1306) connecté au dispositif d'urgence (102) et accessible depuis une surface externe du dispositif d'urgence (102) pour se connecter à une source d'alimentation externe au dispositif d'urgence (102) de sorte que la source d'alimentation externe puisse charger la source d'alimentation rechargeable (1408) et puisse compléter la source d'alimentation rechargeable (1408) et la source d'énergie solaire (1402) lorsqu'elle est couplée à l'au moins un connecteur (1306) ;
un dispositif connectant la source d'énergie solaire (1402) et la source d'alimentation rechargeable (1408) pour commander le flux d'énergie provenant de la source d'énergie solaire (1402) et des sources d'alimentation rechargeables (1408) vers l'au moins un témoin d'alerte de sorte que l'énergie provenant de la source d'énergie solaire (1402) charge la source d'alimentation rechargeable (1408) et alimente l'au moins un témoin d'alerte (134) ;
un circuit de charge d'entretien configuré pour extraire de la puissance de la source d'alimentation externe via une connexion sans fil, et
une interface de commande (164a) pouvant être placée dans un intérieur du véhicule (138) en communication avec le dispositif d'urgence (102) pour commander l'au moins un témoin d'alerte (134).

2. Système de la revendication 1, dans lequel l'interface de commande comprend un commutateur de commande qui sélectionne au moins l'une parmi la source d'alimentation rechargeable, la source d'énergie solaire et la source d'alimentation externe pour alimenter l'au moins un témoin d'alerte.

3. Système de la revendication 1, comprenant en outre un chargeur de batterie pour recevoir de la puissance d'au moins l'une parmi la source d'énergie solaire et la source d'alimentation externe de manière à charger la source d'alimentation rechargeable.

4. Système de la revendication 3, comprenant en outre un régulateur de tension pour réguler la puissance fournie pour l'au moins un témoin d'alerte à partir d'au moins l'une parmi la source d'alimentation rechargeable, la source d'énergie solaire et la source d'alimentation externe.

5. Système de la revendication 2, comprenant en outre un capteur de lumière pour détecter une condition d'éclairage,
dans lequel l'interface de commande effectue automatiquement la sélection en réponse à la condition d'éclairage détectée.

6. Système de la revendication 2, dans lequel le commutateur de commande comprend :
une première position pour sélectionner au moins l'une parmi la source d'énergie solaire et la source d'alimentation rechargeable pour alimenter l'au moins un témoin d'alerte ;
une deuxième position pour éteindre le dispositif d'urgence ; et
une troisième position pour sélectionner la source d'alimentation externe pour alimenter l'au moins un témoin d'alerte.

7. Système de la revendication 6, dans lequel la source d'alimentation externe comprend un système d'alimentation de véhicule.

8. Système de la revendication 1, comprenant en outre un connecteur de sortie pour délivrer en sortie la puissance générée par la source d'énergie solaire.

9. Système de la revendication 1, dans lequel le dispositif d'urgence comprend en outre un boîtier et la source d'énergie solaire comprend un ou plusieurs panneaux solaires disposés sur une surface extérieure du boîtier.

10. Procédé pour fournir de l'énergie à un dispositif d'urgence monté sur véhicule (102), comprenant :
extraire de l'énergie d'une première source (1408) disposée à l'intérieur d'un boîtier du dispositif d'urgence (102), où la première source (1408) est rechargeable ;
délivrer la puissance extraite à un dispositif de signalisation à l'intérieur du dispositif d'urgence (102) ;
lors du fonctionnement normal du véhicule, commander une confluence d'énergie provenant de la première source (1408) et d'une deuxième source (1402) de sorte que le dispositif de signalisation reçoive toute l'énergie dont il a besoin pour fonctionner correctement et pour amener la deuxième source (1402) à charger la première source (1408) lorsque plus d'énergie que celle requise par le dispositif de signalisation est disponible à partir de la deuxième source (1402), et
extraire de l'énergie d'une troisième source externe au dispositif d'urgence (102) via une connexion sans fil pour fournir une charge d'entretien cohérente de manière à compléter la première source (1408) et la deuxième source (1402), et
sélectionner la troisième source pour fournir une charge d'entretien à la première source (1408) de manière à compléter la deuxième source (1402) pendant le fonctionnement normal du véhicule,
dans lequel la deuxième source (1402) est une source d'énergie solaire.

11. Procédé de la revendication 10, comprenant en outre la détection d'une condition d'éclairage et la commande de la confluence d'énergie en réponse à la condition d'éclairage détectée.

12. Procédé de la revendication 10, comprenant en outre la sélection d'au moins l'une parmi la deuxième source (1402) et la troisième source pour charger la première source (1408).
